(19) Europäisches Patentamt
European Patent Office
Office européen des brevets

(11) EP 2 751 151 B1

(12) **EUROPEAN PATENT SPECIFICATION**

(45) Date of publication and mention of the grant of the patent:
**07.03.2018 Bulletin 2018/10**

(21) Application number: **12750788.7**

(22) Date of filing: **29.08.2012**

(51) Int Cl.:
***C08F 110/06*** *(2006.01)* ***C08L 23/12*** *(2006.01)*
***H01B 3/44*** *(2006.01)*

(86) International application number:
**PCT/EP2012/066724**

(87) International publication number:
**WO 2013/030206 (07.03.2013 Gazette 2013/10)**

# (54) POWER CABLE COMPRISING POLYPROPYLENE

STROMKABEL MIT POLYPROPYLEN

CÂBLE ÉLECTRIQUE COMPRENANT DU POLYPROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.08.2011 EP 11179348**

(43) Date of publication of application:
**09.07.2014 Bulletin 2014/28**

(73) Proprietor: **Borealis AG**
**1220 Vienna (AT)**

(72) Inventors:
- **VESTBERG, Torvald**
  **FI-06100 Porvoo (FI)**
- **DENIFL, Peter**
  **FI-00990 Helsinki (FI)**
- **HAGSTRAND, Per-Ola**
  **S-44446 Stenungsund (SE)**
- **ENGLUND, Villgot**
  **S-41664 Göteborg (SE)**
- **NILSSON, Ulf**
  **S-44441 Stenungsund (SE)**
- **NYMARK, Anders**
  **FI-06100 Porvoo (FI)**

(74) Representative: **Lux, Berthold**
**Maiwald Patentanwalts GmbH**
**Elisenhof**
**Elisenstraße 3**
**80335 München (DE)**

(56) References cited:
**EP-A1- 1 881 507** **EP-A1- 1 903 579**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 751 151 B1

## Description

The present invention is directed to a new high voltage direct current power cable or extra high voltage direct current power cable, containing a polypropylene comprising evenly distributed nanosized catalyst fragments.

Polyolefins are widely used in demanding polymer applications wherein the polymers must meet high mechanical and/or electrical requirements. For instance in power cable applications, particularly in medium voltage (MV) and especially in high voltage (HV) and extra high voltage (EHV) cable applications the electrical properties of the polymer composition has a significant importance. Furthermore, the electrical properties of importance may differ in different cable applications, as is the case between alternating current (AC) and direct current (DC) cable applications.

A typical power cable comprises a conductor surrounded by at least one layer. The cables are commonly produced by extruding the layers on a conductor.

Power cable is defined to be a cable transferring energy operating at any voltage level. The voltage applied to the power cable can be alternating (AC), direct (DC) or transient (impulse). Moreover, power cables are typically indicated according to their level of operating voltage, e.g. a low voltage (LV), a medium voltage (MV), a high voltage (HV) or an extra high voltage (EHV) power cable, which terms are well known. EHV power cable operates at voltages which are even higher than typically used for HV power cable applications. LV power cable and in some embodiment medium voltage (MV) power cables usually comprise an electric conductor which is coated with an insulation layer. Typically MV and HV power cables comprise a conductor surrounded at least by an inner semiconductive layer, an insulation layer and an outer semiconductive layer, in that order.

EP 1 881 507 A1 and EP 1 903 579 A1 respectively describe power cables having a cable layer on polypropylene basis, wherein said polypropylene has been prepared in the presence of a self-supported metallocene solid catalyst system.

Thus the object of the present invention is to provide a layer of a high voltage direct current (HVDC) power cable or extra high voltage direct current (EHVDC) power cable, which comprises polymer material with low conductivity.

The finding of the present invention is to use a polypropylene in a layer of the power cable, wherein the polypropylene contains evenly distributed catalyst residues in nano-size range.

Accordingly the present invention is directed to a high voltage direct current power cable or an extra high voltage direct power cable comprising a conductor surrounded by at least one layer (L) comprising a polypropylene (PP), wherein the polypropylene (PP) comprises nanosized catalyst fragments (F) which originate from a solid catalyst system (SCS).

The "nanosized" catalyst fragments (F) have a mean particle size d50 of below 1 $\mu$m.

Said catalyst fragments (F) originate from a solid catalyst system (SCS) which preferably has one or more of the following properties, in any order:

(a) has a pore volume measured according ASTM 4641 of less than 1.40 ml/g, and/or
(b) has a surface area measured according to ASTM D 3663 of lower than 30 $m^2/g$, and/or
(c) has a mean particle size d50 in the range of 1 to 200 $\mu$m, preferably in the range of 10 to 150 $\mu$m.

More preferably the polypropylene (PP) comprises catalyst fragments (F) which have a mean particle size d50 of below 1 $\mu$m solid and which originate from a catalyst system (SCS), wherein the catalyst system (SCS) has (b) a surface area measured according to ASTM D 3663 of lower than 30 $m^2/g$, more preferably has all the above properties (a) to (c).

Even more preferably the solid catalyst system (SCS) is other than a catalyst system wherein the catalytically active components are deposited on a solid external, optionally porous, support system (i.e. externally supported catalyst system) or are precipitated in a one phase liquid system, i.e. in a non-dispersed liquid system, from a mother liquid (i.e. a precipitated catalyst system). The solid external support system means that a particulate external support material is prepared separately before the preparation of the solid catalyst system (SCS). A final supported catalyst system is then prepared by adding the catalytically active components to the premade solid particulate support material, which may optionally be porous, in order to deposite the catalytically active components on the optionally porous external support particles. Such external support material can be e.g. silica, alumina, polymer or Mg-based, such as $MgCl_2$, based solid support particles. The precipitated catalyst system in turn is typically porous and may be inhomogeneous as regards to the particle size and morphology (shape and/or surface structure). The precipitation typically occurs due to a chemical reaction between reactive components dissolved in the mother liquid.

It is preferred that the solid catalyst system (SCS) is obtained (produced) by

(a) providing a solution (S) comprising an organometallic compound of a transition metal of one of the groups 3 to 10 of the periodic table (IUPAC),
(b) forming a liquid/liquid emulsion system (E), which comprises said solution (S) as droplets dispersed in the continuous phase of the emulsion system (E),
(c) solidifying said dispersed phase (droplets) to form the solid catalyst system (SCS).

The solid catalyst system (SCS) comprises optionally inclusions (IC) which are not catalytically active. The inclusions (IC) are voids which are dispersed within the catalyst system (SCS) at time of the preparation of the catalyst system (SCS). The voids thus form a separate, dispersed phase within the catalyst system (SCS). Said voids are selected from hollow voids or voids which comprise or consist of a catalytically inactive liquid or solid material, preferably consist of a catalytically inactive solid material. Most preferably the optional inclusions (IC) are voids which comprise, preferably consist of, a catalytically inactive solid material. When the inclusions (IC) of catalyst system (SCS) comprise, preferably consist of, a catalytically inactive solid material, then the amount of such catalytically inactive solid material is preferably of 30 wt.-% or less, more preferably 20 wt-% or less, still more preferably not more than 10 wt-%, based on the solid catalyst system (SCS). Said optional inclusions can be desired and preferable depending on the end applicaton of the cable. In embodiments, preferably in direct current (DC) cable applications, where distribution of such inclusions (IC), preferably inclusions (IC) formed by voids of a catalytically inactive solid material, in the polypropylene (PP) is desired to contribute to the electrical properties of the polypropylene (PP), then the catalyst system (SCS) preferably contains said inclusions (IC). The optional inclusions (IC) and electrical properties are further discussed later below.

It has been surprisingly found out that a layer of a power cable containing a polypropylene (PP) as defined above in one of the three independent alternatives of the invention have improved electrical properties shown e.g. as reduced electrical conductivity. In addition, a reduction in particle size of any catalyst residues present in the polypropylene will reduce the probability for electrical degradation phenomena such as electrical- and water tree initiation, etc, which combined or independently may lead to electrical failure of the insulation system.

In the following the three embodiments will be described in more detail together.

## The polypropylene (PP)

One essential aspect of the present invention is the specific selected polypropylene (PP) in the layer (L). Accordingly in the following the polypropylene (PP) will be described in more detail.

The polypropylene (PP) of the present invention is featured by the presence of unique catalyst residues. More precisely the polypropylene (PP) is characterized by catalyst fragments (F) being of nanosized range. These fragments (F) originate from the solid catalyst system (SCS) used for the manufacture of the polypropylene (PP). The used process for the manufacture of the polypropylene (PP) including the specific solid catalyst system (SCS) is defined in more detail below. Accordingly the polypropylene (PP) according to this invention is preferably produced in the presence of a solid catalyst system (SCS), wherein the active catalyst species of said solid catalyst system (SCS) preferably is either Ziegler-Natta catalyst or a single site catalyst, more preferably is a single site catalyst.

As mentioned above, the term "nanosized" according to this invention means that the catalyst fragments (F) have a mean particle size d50 of below 1 $\mu$m, more preferably of below 800 nm, still more preferably 20 to 600 nm, yet more preferably 30 to 500 nm, like 30 to 300 nm.

The expression "even distribution" (or similar terms like "evenly distributed") of the nanosized catalyst fragments (F) in the polypropylene (PP) shall indicate that the fragments (F) are not localized in one specific area of the polypropylene (PP) but anywhere in the polypropylene (PP). This expression shall in particular indicate that the fragments (F) originate from a solid catalyst system (SCS) which breaks at very early stage of polymerization of the polypropylene (PP) in very small, nano-size particles and thus are evenly distributed in the growing polypropylene (PP). Such an even distribution of any nanomatrial is not possible to achieve by adding solid material separately into the polymer.

It has been surprisingly found that the polypropylene (PP) containing nanosized catalyst fragments (F), which originate from the solid catalyst system (SCS), have interesting electrical properties, i.e. low electrical conductivity. In other words, the nanosized catalyst fragments (F) described herein do not deteriorate the electrical properties of the polypropylene (PP), and thus, the amount of fragments is not a critical issue. To the contrary it seems that the specific nanosized catalyst fragments (F) are useful to lower electrical conductivity, and also reduce the probability for electrical failure, compared to conventional catalyst residues. As a result of this, a costly and troublesome purifying step of the polymer can be omitted.

Thus, the amount of nanosized catalyst fragments (F), typically measured by the ash content, is not a restrictive feature of the polypropylene (PP) and can be according to the invention be on the level as normally required for power cables or it can be higher than normally accepted. Accordingly in one embodiment of the present invention the polypropylene (PP) can have an ash content of above 30 ppm, more preferably in the range of 30 to 500 ppm, like in the range of 50 to 300 ppm, e.g. in the range of 60 to 200 ppm, when determined according to "Ash calculated total" described below under "A. Measuring methods" .

Normally with such high ash content the electrical properties of a polypropylene are unsatisfactorily, which however is not the case for the polypropylene (PP) of the instant invention. Without be bonded on the theory, the good electrical properties achieved with the polypropylene (PP) containing even rather high amount of nanosized catalyst fragments (F), i.e. high ash content, might be due to the even distribution of the nanosized catalyst fragments (F) within the polypropylene (PP) and thus within the layer (L) as well as due the low size of the nanosized catalyst fragments (F).

Such an even nanosized particle size distribution is obtainable by the employment of the solid catalyst system (SCS) as defined in detail below.

Accordingly it is appreciated that the polypropylene (PP) and/or the layer (L) is featured by an electrical conductivity of 50 fS/m or less, more preferably of < 0.01 (lower values not detectable by the DC conductivity measurement) to 40 fS/m, more preferably of <0.01 to 30 fS/m, more preferably of <0.01 to 20 fS/m, still more preferably of <0.01 to 10 fS/m, yet more preferably of <0.01 to 8.00 fS/m, still yet more preferably of <0.01 to 6.00 fS/m, still yet more preferably of <0.01 to 5.00 fS/m, still yet more preferably of <0.01 to 4.00 fS/m, still yet more preferably of <0.01 to 3.5 fS/m, still yet more preferably of <0.01 to 3.0 fS/m, still yet more preferably <0.01 to 2.5 fS/m when measured according to DC conductivity method as described in the "Example Section".

In another embodiment the ash content can be equal or below 30 ppm, more preferably equal or below 20 ppm, still more preferably in the range of 1 to equal or below 30 ppm, yet more preferably in the range of 1 to equal or below 20 ppm. These values are in particular accomplished in case the polypropylene (PP) has been purified, i.e. washed. Also in such a case the electrical conductivity of the polypropylene (PP) is the same as indicated above. Thus contrary to the state of the art the electrical conductivity is independently from the amount of catalyst residues present in the polypropylene (PP) and thus in the layer (L).

The polypropylene (PP) according to this invention can be a propylene homopolymer (H-PP), a random propylene copolymer (R-PP) or a heterophasic propylene copolymer (HECO). More preferably the polypropylene can be a random propylene copolymer (R-PP) or a heterophasic propylene copolymer (HECO).

In one embodiment the propylene homopolymer (H-PP) or the random propylene copolymer (R-PP) constitutes the matrix of the heterophasic propylene copolymer (HECO). Accordingly first the propylene homopolymer (H-PP) and the random propylene copolymer (R-PP) are described in more detail and subsequently the heterophasic propylene copolymer (HECO).

The expression homopolymer used in the instant invention relates to a polypropylene that consists substantially, i.e. of equal or more than 99.5 wt.-%, more preferably of equal or more than 99.8 wt.-%, of propylene units. In a preferred embodiment only propylene units in the propylene homopolymer are detectable.

In case the polypropylene (PP) is a random propylene copolymer (R-PP) it comprises monomers copolymerizable with propylene, for example comonomers such as ethylene and/or $C_4$ to $C_{12}$ $\alpha$-olefins, in particular ethylene and/or $C_4$ to $C_{10}$ $\alpha$-olefins, e.g. 1-butene and/or 1-hexene. Preferably the random propylene copolymer (R-PP) comprises, especially consists of, monomers copolymerizable with propylene selected from the group consisting of ethylene, 1-butene and 1-hexene. In a preferred embodiment the random propylene copolymer (R-PP) comprises units derivable from ethylene and propylene only. In another preferred embodiment the random propylene copolymer (R-PP) comprises units derivable from 1-hexene and propylene only. In still another preferred embodiment the random propylene copolymer (R-PP) comprises units derivable from 1-butene and propylene only. The comonomer content in the random propylene copolymer (R-PP) is preferably in the range of more than 0.5 to 12.0 wt.-%, still more preferably in the range of more than 0.5 to 10.0 wt.-%, yet more preferable in the range of more than 0.5 to 8.0 wt.-%.

In one embodiment the propylene homopolymer (H-PP) or the random propylene copolymer (R-PP) is produced by single-site catalyst as defined in detail below. In such a case the propylene homopolymer (H-PP) or the random propylene copolymer (R-PP) is featured by a rather high amount of regio misinsertions of propylene within the polymer chain. Accordingly the propylene homopolymer (H-PP) or the random propylene copolymer (R-PP) is featured by a high amount of <2,1> erythro regiodefects, i.e. of more than 0.1 mol.-%, more preferably of equal or more than 0.2 mol.-%, yet more preferably of more than 0.4 mol.-%, still more preferably of more than 0.6 mol.-%, like in the range of 0.7 to 0.9 mol.-%, determined by $^{13}$C-NMR spectroscopy. In case the propylene homopolymer (H-PP) or the random propylene copolymer (R-PP) are produced by a Ziegler-Natta catalyst the <2,1> erythro regiodefects are equal or below 0.1 mol.-%, more preferably are not detectable.

Accordingly the polypropylene (PP) of the present invention can be obtained by a solid catalyst system (SCS) as defined in more detail below, wherein the active catalyst species can be a Ziegler-Natta catalyst or a single-site catalyst as specified herein. As mentioned above, in one preferable embodiment said solid catalyst system (SCS) comprises inclusions (IC) which are not catalytically active. Reference is made in this regard to the section solid catalyst system (SCS).

In case the polypropylene (PP) is a propylene homopolymer (H-PP) the xylene cold soluble (XCS) content is in the range of 0.1 to 4.5 wt.-%, more preferably in the range of 0.1 to 4.0 wt.-%, still more preferably of 0.2 to 4.0 wt.-%.

The xylene cold soluble (XCS) content of the random propylene copolymer (R-PP) may differ from the xylene cold soluble (XCS) of the propylene homopolymer (H-PP). Accordingly it is appreciated that the random propylene copolymer (R-PP) has a xylene cold soluble (XCS) content of up to 20.0 wt.-%, more preferably up to 15.0 wt.-%, still more preferably in the range of 0.5 to 10.0 wt.-%, based on the random propylene copolymer (R-PP).

In one preferred embodiment the propylene homopolymer (H-PP) or the random propylene copolymer (R-PP) has a melting temperature ($T_m$) determined by differential scanning calorimetry (DSC) of at least 120 °C, more preferably of at least 130 °C, yet more preferably in the range of 120 to 168 °C, like in the range of 130 to 165 °C.

Furthermore, it is preferred that the propylene homopolymer (H-PP) or the random propylene copolymer (R-PP) has a melt flow rate given in a specific range. Accordingly, it is preferred that the propylene homopolymer (H-PP) or the random propylene copolymer (R-PP) has a melt flow rate $MFR_2$ (230 °C) measured according to ISO 1133 of up to 150 g/10 min, more preferably from 0.01 to 100 g/10min. Thus it is preferred that the propylene homopolymer (H-PP) or the random propylene copolymer (R-PP) has a melt flow rate $MFR_2$ (230 °C) in the range of 0.01 to 50 g/10 min, more preferably in the range of 0.01 to 40.0 g/10 min, still more preferably in the range of 0.05 to 30.0 g/10 min, yet more preferably in the range of 0.1 to 20.0 g/10 min, still yet more preferably in the range of 0.2 to 15.0 g/10 min.

The polypropylene (PP) can preferably be also a heterophasic propylene copolymer (HECO). A heterophasic propylene copolymer (HECO) according to this invention comprises a polypropylene, in particular the propylene homopolymer (H-PP) and/or the random propylene copolymer (R-PP), as a matrix (M) and dispersed therein an elastomeric propylene copolymer (E). Thus the matrix (M), i.e. the propylene homopolymer (H-PP) and/or the random propylene copolymer (R-PP), contains (finely) dispersed inclusions being not part of the matrix (M) and said inclusions contain the elastomeric propylene copolymer (E). The term inclusion indicates that the matrix (M) and the inclusion form different phases within the heterophasic propylene copolymer (HECO), said inclusions are for instance visible by high resolution microscopy, like electron microscopy or scanning force microscopy.

Preferably the heterophasic propylene copolymer (HECO) according to this invention comprises as polymer components only the matrix (M), i.e. the propylene homopolymer (H-PP) and/or the random propylene copolymer (R-PP), and the elastomeric propylene copolymer (E). In other words the heterophasic propylene copolymer (HECO) may contain further additives but no other polymer in an amount exceeding 2.0 wt-%, more preferably exceeding 1.0 wt.-%, like exceeding 0.5 wt.-%, based on the total heterophasic propylene copolymer (HECO). One additional polymer which may be present in such low amounts is a polyethylene which is a by-reaction product obtained by the preparation of heterophasic propylene copolymer (HECO). Accordingly it is in particular appreciated that the instant heterophasic propylene copolymer (HECO) contains only the matrix (M), i.e. the propylene homopolymer (H-PP) and/or the random propylene copolymer (R-PP), the elastomeric propylene copolymer (E) and optionally polyethylene in amounts as mentioned in this paragraph.

Accordingly, the heterophasic propylene copolymer (HECO) comprises apart from propylene also comonomers. These comonomers origin from the elastomeric propylene copolymer (E) and optionally from the matrix (M) being the random propylene copolymer (R-PP). Accordingly the heterophasic propylene copolymer (HECO) comprises apart from propylene ethylene and/or $C_4$ to $C_{12}$ $\alpha$-olefins, in particular ethylene and/or $C_4$ to $C_{10}$ $\alpha$-olefins, e.g. 1-butene and/or 1-hexene. Preferably the heterophasic propylene copolymer (HECO) according to this invention comprises, especially consists of, monomers copolymerizable with propylene from the group consisting of ethylene, 1-butene and 1-hexene.

Still more preferably the matrix (M) of the heterophasic propylene copolymer (HECO) is either a propylene homopolymer or a random propylene copolymer. It is in particular preferred that the matrix (M) is the propylene homopolymer (H-PP) or the random propylene copolymer (R-PP) as defined above.

According to one embodiment, the elastomeric propylene copolymer (E) comprises monomers copolymerizable with propylene, for example, comonomers such as ethylene and/or $C_4$ to $C_{12}$ $\alpha$-olefins, preferably ethylene and/or $C_4$ to $C_{10}$ $\alpha$-olefins, e.g. 1-butene and/or 1-hexene. Preferably the elastomeric propylene copolymer comprises, especially consists of, monomers copolymerizable with propylene from the group consisting of ethylene, 1-butene and 1-hexene. More specifically the elastomeric propylene copolymer comprises - apart from propylene - units derivable from ethylene and/or 1-butene. Thus, in an especially preferred embodiment the elastomeric propylene copolymer phase comprises units derivable from ethylene and propylene only.

Additionally it is appreciated that the heterophasic propylene copolymer (HECO) preferably has a total comonomer content equal or below 20.0 wt.-%, like equal or below 15.0 wt.-%, more preferably in the range of 2.0 to 15.0 wt.-%.

The xylene cold soluble (XCS) fraction of the heterophasic propylene copolymer (HECO) is preferably below 50.0 wt.-%, more preferably in the range from 15 to 50 wt.-%, still more preferably in the range from 20 to 40 wt.-%, based on the total amount of the heterophasic propylene copolymer (HECO).

The heterophasic propylene copolymer (HECO) is in particular defined by the matrix (M) and the elastomeric propylene copolymer (EC) dispersed therein. With regard to preferred embodiments of the matrix (M) reference is made to the polypropylene (PP), i.e. to the propylene homopolymer (H-PP) or to the random propylene copolymer (R-PP), as discussed above. As mentioned it is especially preferred that the matrix (M) is a random propylene copolymer (R-PP).

It is especially preferred that the polypropylene (PP) is a random propylene copolymer (R-PP) or a heterophasic propylene copolymer (HECO) as defined in the instant invention. Accordingly in one particular preferred embodiment the polypropylene (PP) is a random propylene copolymer (R-PP) or a heterophasic propylene copolymer (HECO) as defined in the instant invention which has been produced in the presence of a solid catalyst system (SCS), wherein the active catalyst species of said solid catalyst system (SCS) can be either Ziegler-Natta catalyst or a single site catalyst as specified in more detail below, more preferably the active catalyst species of said solid catalyst system (SCS) is a single site catalyst as specified in more detail below. In one specific preferred aspect of the present invention the polypropylene (PP) is a heterophasic propylene copolymer (HECO) as defined above, even more preferred said heterophasic propylene copolymer (HECO) has been produced with a solid catalyst system (SCS) including a a single site catalyst species. The used solid catalyst system (SCS) may optionally contain inclusions (IC), which are then preferably formed by voids comprising, preferably consisting of, catalytically inactive solid material.

## Further Polymers

As indicated above the power cable may comprise additional polymers.

One additional polymer can be a polyethylene as defined in more detail below.

In one preferred embodiment the polyethylene is a low density polyethylene (LDPE). The low density polyethylene (LDPE) may be a low density homopolymer of ethylene (referred herein as LDPE homopolymer) or a low density copolymer of ethylene with one or more comonomer(s) (referred herein as LDPE copolymer). The "low density polyethylene", LDPE is a polyethylene produced in a high pressure process (HP). Typically the polymerization of ethylene and optional further comonomer(s) in the high pressure process is carried out in the presence of an initiator(s). The meaning of LDPE polymer is well known and documented in the literature. Although the term LDPE is an abbreviation for low density polyethylene, the term is understood not to limit the density range, but covers the LDPE-like HP polyethylenes with low, medium and higher densities. The term LDPE describes and distinguishes only the nature of HP polyethylene with typical features, such as different branching architecture, compared to the polyethylene produced in the presence of an olefin polymerization catalyst. The one or more comonomers of LDPE copolymer are preferably selected from the polar comonomer(s), non-polar comonomer(s) or from a mixture of the polar comonomer(s) and non-polar comonomer(s), as defined below. Moreover, said LDPE homopolymer or LDPE copolymer may optionally be unsaturated.

As well known "comonomer" refers to copolymerizable comonomer units.

Preferably the LDPE copolymer comprises 0.001 to 50 wt.-%, more preferably 0.05 to 40 wt.-%, still more preferably less than 35 wt.-%, still more preferably less than 30 wt.-%, more preferably less than 25 wt.-%, of one or more comonomer(s).

Typically, and preferably in cable applications, the density of LDPE is higher than 860 $kg/m^3$. Preferably the density of the LDPE homopolymer or copolymer is not higher than 960 $kg/m^3$, and preferably is from 900 to 945 $kg/m^3$. The $MFR_2$ (2.16 kg, 190 °C) the LDPE polymer is preferably from 0.01 to 50 g/10min, preferably of from 0.05 to 30.0 g/10 min, more preferably is from 0.1 to 20 g/10min, and most preferably is from 0.2 to 10 g/10min.

As mentioned the low density polyethylene (LDPE) is preferably produced at high pressure by free radical initiated polymerization (referred to as high pressure (HP) radical polymerization). The HP reactor can be e.g. a well-known tubular or autoclave reactor or a mixture thereof, preferably a tubular reactor. The high pressure (HP) polymerization and the adjustment of process conditions for further tailoring the other properties of the polyolefin depending on the desired end application are well known and described in the literature, and can readily be used by a skilled person. Suitable polymerization temperatures range up to 400 °C, preferably from 80 to 350°C and pressure from 70 MPa, preferably 100 to 400 MPa, more preferably from 100 to 350 MPa. Pressure can be measured at least after compression stage and/or after the tubular reactor. Temperature can be measured at several points during all steps.

Further details of the production of ethylene (co)polymers by high pressure radical polymerization can be found i.e. in the Encyclopedia of Polymer Science and Engineering, Vol. 6 (1986), pp 383-410 and Encyclopedia of Materials: Science and Technology, 2001 Elsevier Science Ltd.: "Polyethylene: High-pressure, R.Klimesch, D.Littmann and F.-O. Mähling pp. 7181-7184.

In another preferred embodiment the polyethylene is a polyethylene produced (=polymerised) in the presence of an olefin polymerization catalyst. "Polyolefin produced in the presence of an olefin polymerization catalyst" is also often called as "low pressure polyolefin" to distinguish it clearly from LDPE. Both expressions are well known in the polyolefin field.

"Olefin polymerization catalyst" means herein a conventional coordination catalyst. It is preferably selected from a Ziegler-Natta catalyst, single site catalyst which term comprises a metallocene and a non-metallocene catalyst, or a chromium catalyst, or any mixture thereof.

Preferably the low pressure polyethylene has a MWD of at least 2.0, preferably of at least 2.5, preferably of at least 2.9, preferably from 3 to 30, more preferably from 3.3 to 25, even more preferably from 3.5 to 20, preferably 3.5 to 15.

It is preferred that the low pressure polyethylene is homopolymer or copolymer, the latter especially preferred.

The low pressure polyethylene copolymer is preferably a copolymer of ethylene with one or more olefin comonomer(s), preferably with at least C3 to 20 $\alpha$-olefin, more preferably with at least one C4 to 12 $\alpha$-olefin, more preferably with at least one C4 to 8 $\alpha$-olefin, e.g. with 1-butene, 1-hexene or 1-octene. The amount of comonomer(s) present in a low pressure polyethylene copolymer is from 0.1 to 15 mol%, typically 0.25 to 10 mol-%.

In one preferable embodiment the low pressure polyethylene selected from a very low density ethylene copolymer (VLDPE), a linear low density ethylene copolymer (LLDPE), a medium density ethylene copolymer (MDPE) or a high density ethylene homopolymer or copolymer (HDPE). These well-known types are named according to their density area. The term VLDPE includes herein polyethylenes which are also known as plastomers and elastomers and covers

the density range of from 850 to 909 kg/m$^3$. The LLDPE has a density of from 909 to 930 kg/m$^3$, preferably of from 910 to 929 kg/m$^3$, more preferably of from 915 to 929 kg/m$^3$. The MDPE has a density of from 930 to 945 kg/m$^3$, preferably 931 to 945 kg/m$^3$ The HDPE has a density of more than 945 kg/m$^3$, preferably of more than 946 kg/m$^3$, preferably form 946 to 977 kg/m$^3$, more preferably form 946 to 965 kg/m$^3$.

LLDPE, MDPE or HDPE are preferable types of low pressure polyethylene. More preferably the low pressure polyethylene is a MDPE or a HDPE, the latter especially preferred.

The low pressure polyethylene has preferably an $MFR_2$ (190 °C) of up to 1200 g/10 min, such as of up to 1000 g/10 min, preferably of up to 500 g/10 min, preferably of up to 400 g/10 min, preferably of up to 300 g/10 min, preferably of up to 200 g/10 min, preferably of up to 150 g/10 min, preferably from 0.01 to 100, preferably from 0.01 to 50 g/10 min, preferably from 0.01 to 40.0 g/10 min, preferably of from 0.05 to 30.0 g/10 min, preferably of from 0.1 to 20.0 g/10 min, more preferably of from 0.2 to 15.0 g/10 min.

Suitable low pressure polyethylene is as such well known and can be e.g. commercially available or, alternatively, can be produced according to or analogously to conventional polymerization processes which are well documented in the literature.

The olefin polymerization catalyst of the optional low pressure polyethylene can be selected from well-known coordination catalysts, preferably from Ziegler Natta, single site, which term comprises well known metallocene and non-metallocene catalyst, or Chromium catalyst, or any mixtures thereof. It is evident for a skilled person that the catalyst system comprises a co-catalyst. Suitable Ziegler Natta catalysts for low pressure polyethylene are described e.g. in EP0810235 or EP0688794 which are all incorporated by reference herein.

The polymers described in section "further polymers" are especially suitable as components in the inner semiconductive layer and an outer semiconductive layer as discussed below. The polymers of the section "further polymers" may also present in the layer (L), i.e. in the insulating layer, to some extent, however not as main component which is the polypropylene (PP) as defined above.

## Power cable

As mentioned above the present invention is directed to a power cable. Accordingly the power cable according to this invention can transfer electrical energy operating at any voltage level. The power cable can be in particular a high voltage (HV) or an extra high voltage (EHV) power cable.

The power cable is especially structured such that direct current (DC) can be applied, i.e. the power cable is a direct current (DC) power cable.

According to this invention low voltage (LV) stands for voltages up to 1 kV, medium voltage (MV) stands for voltages from above 1 kV to 40 kV, and a high voltage (HV) stands for voltages above 40 kV, preferably above 50 kV. The term extra high voltage (EHV) preferably stands for voltages of at least 230 kV. Accordingly high voltage (HV) typically ranges from above 40 to below 230 kV, like 50 to below 230 kV, whereas extra high voltage (EHV) is at least 230 kV. Un upper limit is not critical. Thus extra high voltage (EHV) must be at least 230 kV and can be up to 900 kV or even higher.

The properties of the polypropylene (PP) of the present invention are highly advantageous for the direct current (DC) power cable applications, and particularly for high voltage (HV) and extra high voltage (EHV) DC power cables. For DC cables the operating voltage is defined herein as the electric voltage between ground and the conductor of the cable. Accordingly, the power cable of the invention is a high voltage (HV) or an extra high voltage (EHV) DC power cable.

The invention is especially highly feasible in very demanding cable applications and can be used for high voltage direct current (HVDC) power cables (including extra high voltage direct current (EHVDC) power cables) operating at voltages higher than 50 kV, e.g. at least 70 kV, more preferably in the range of 60 to 800 kV, yet more preferably in the range of 75 to 800 kV, like in the range of 75 to 350 kV. Preferably, the present is directed to a high voltage direct current (HVDC) power cable (including an extra high voltage direct current (EHVDC) power cable) operating at voltages from 50 to 900 kV, still more preferably 60 to 800 kV, yet more preferably 75 to 800 kV, like 75 to 350 kV. More preferably, the invention is advantageous for use in high voltage direct current (HVDC) power cable (including extra high voltage direct current (EHVDC) power cable) applications operating from 75 to 400 kV, preferably 75 to 350 kV. The invention is also found to be advantageous even in demanding extra high voltage power cable, like extra high voltage direct current (EHVDC) power cable, applications operating e.g. at up to 900 kV, preferably from 400 to 850 kV.

Accordingly, the term "high voltage (HV) power cable", which is a high voltage direct current (HVDC) power cable, as used below or in claims, means herein either a high voltage direct current (HVDC) power cable operating at voltages as defined above, or an extra high voltage direct current (EHVDC) power cable preferably operating at voltages as defined above. Thus the term covers independently the operating areas for both the high voltage direct current (HVDC) cable and also extra high voltage direct current (EHVDC) cable applications.

The power cable of this invention comprises a conductor and at least one layer (L), wherein the layer (L) comprises a specific polypropylene (PP) which defined in more detail below.

The term "conductor" means herein above and below that the conductor comprises one or more wires. Moreover, the cable may comprise one or more such conductors. Preferably the conductor is an electrical conductor and comprises one or more metal wires.

In a preferred embodiment the invention is directed to high voltage direct current (HVDC) power cable comprising a conductor surrounded by an inner semiconductive layer, an insulating layer and an outer semiconductive layer, in that order, wherein at least the insulation layer is layer (L), preferably wherein the layer (L) is only the insulation layer.

Accordingly, the layer (L) of the invention may contain, in addition to the polypropylenen (PP), further component(s) such as polymer component(s) and/or additive(s), preferably additive(s), such as any of antioxidant(s), scorch retarder(s), crosslinking booster(s), stabiliser(s), processing aid(s), flame retardant additive(s), water tree retardant additive(s), acid or ion scavenger(s), inorganic filler(s) and voltage stabilizer(s), as known in the polymer field. The polymer composition of the layer (L) comprises preferably conventionally used additive(s) for wire and cable applications, such as one or more antioxidant(s). The used amounts of additives are conventional and well known to a skilled person.

The layer (L), e.g. the insulation layer, must comprise the polypropylene (PP). Accordingly layer (L), e.g. the insulation layer, may comprise additional polymers like a polyethylene as defined in the section "further polymers". In one preferred embodiment the layer (L), e.g. the insulation layer, is free of any crosslinked polymer. The crosslinked polymer composition has a typical network, i.e. interpolymer crosslinks (bridges), as well known in the field. Crosslinking is a post-treatment, which is typically carried out by peroxide crosslinking or silane-crosslinking. Thus in one preferred embodiment any polymers, including the polypropylene (PP), is a non-crosslinked polymer material

Further it is preferred that polypropylene (PP) is the main polymer component in the layer (L), e.g. in the insulation layer. Therefore it is preferred that the layer (L), e.g. the insulation layer, comprises at least 50 wt.-%, more preferably comprises at least 75 wt.-%, still more preferably comprises at least 80 wt.-%, e.g. 80 to 99 wt.-% or 80 to 100 wt.-%, yet more preferably at least 90 wt.-%, e.g. 90 to 99 wt.-% or 90 to 100 wt.-%, of the total weight of the polymer component(s) present in the layer (L). The preferred layer (L) consists of the polypropylene (PP) as the only polymer component. The expression means that the layer (L), e.g. the insulation layer, does not contain further polymer components, but the polypropylene (PP) as the sole polymer component. However, it is to be understood herein that the layer (L), e.g. the insulation layer, may comprise further component(s) other than the polypropylene (PP) component, such as additive(s) as mentioned above, which may optionally be added in a mixture with a carrier polymer in a so called master batch. Such carrier polymer of a master batch is not counted in to the amount of polymer component(s), but to the total amount of the polymer composition of the layer (L).

It is evident for and within the skills of a skilled person that the thickness of the layers of the power cable depends on the intended voltage level of the end application cable and can be chosen accordingly. It is preferred that the diameter of the layer (L), e.g. the insulation layer, is typically 2 mm or more, preferably at least 3 mm, preferably of at least 5 to 100 mm, more preferably from 5 to 50 mm, and conventionally 5 to 40 mm, e.g. 5 to 35 mm, when measured from a cross section of the layer (L), e.g. of the insulation layer, of the power cable.

The thickness of the inner and outer semiconductive layers - if present - is typically less than that of the layer (L), i.e. of the insulation layer, and can be e.g. more than 0.1 mm, such as from 0.3 up to 20 mm, e.g. 0.3 to 10 mm. The thickness of the inner semiconductive layer is preferably 0.3 to 5.0 mm, more preferably 0.5 to 3.0 mm, still more preferably 0.8 to 2.0 mm. The thickness of the outer semiconductive layer is preferably from 0.3 to 10 mm, more preferably 0.3 to 5 mm, still more preferably 0.5 to 3.0 mm, such as 0.8 to 3.0 mm.

The inner and outer semiconductive layers can be different or identical and comprise a polymer(s) which is/are preferably a polyethylene as discussed in the section "further polymers", and a conductive filler, preferably carbon black. The carbon black can be any conventional carbon black, especially a carbon black as used in the semiconductive layers of a DC power cables. Preferably the carbon black has one or more of the following properties: a) a primary particle size of at least 5 nm which is defined as the number average particle diameter according ASTM D3849-95a, dispersion procedure D b) iodine number of at least 30 mg/g according to ASTM D1510, c) oil absorption number of at least 30 ml/100g which is measured according to ASTM D2414. Non-limiting examples of carbon blacks are e.g. acetylene carbon black, furnace carbon black and Ketjen carbon black, preferably furnace carbon black and acetylene carbon black. Preferably, the inner and outer semiconductive layers comprise 10 to 50 wt% carbon black, based on the weight of the inner and outer semiconductive layer, respectively. The polymer of the inner and outer semiconductive layers may be non-crosslinked or cross-linked, depending on the desired end application.

As well known the cable of the invention can optionally comprise further layers, e.g. layers surrounding the insulation layer or, if present, the outer semiconductive layers, such as screen(s), a jacketing layer(s), other protective layer(s) or any combinations thereof.

The power cable is obtained by applying on the conductor, preferably by (co)extrusion, at least one layer (L) which comprises, preferably consists of, the polypropylene (PP). More preferably the power cable is obtained by apply on the conductor an inner semiconductive layer, an insulating layer and an outer semiconductive layer, in that order, wherein at least the insulating layer comprises, more preferably consists of the polypropylene (PP). The inner and/or outer layer may also comprise the polypropylene (PP). Alternatively, and preferably, the inner and/or outer layer comprise,

more preferably consists of, the polymer, i.e. the polyethylene discussed in the section "further polymers".

The term "(co)extrusion" means herein that in case of two or more layers, said layers can be extruded in separate steps, or at least two or all of said layers can be coextruded in a same extrusion step, as well known in the art. The term "(co)extrusion" means herein also that all or part of the layer(s) are formed simultaneously using one or more extrusion heads.

As well known a meltmix of the polymers is applied to form a layer. Meltmixing means mixing above the melting point of at least the major polymer component of the obtained mixture and is carried out for example, without limiting to, in a temperature of at least 10 to 15°C above the melting or softening point of polymer component(s). The mixing step can be carried out in the cable extruder. The meltmixing step may comprise a separate mixing step in a separate mixer, e.g. kneader, arranged in connection and preceding the cable extruder of the cable production line. Mixing in the preceding separate mixer can be carried out by mixing with or without external heating (heating with an external source) of the component(s).

The layer (L) may or may not be crosslinked. It is preferred that the layer (L) is not crosslinked.

## Solid catalyst system (SCS)

As pointed out above the polypropylene (PP) used for the power cable is obtainable, preferably obtained, by the use of a specific solid catalyst system (SCS). Accordingly in the following the solid catalyst system (SCS), its preparation, as well as the polymerization process of the polypropylene (PP) will be described in more detail.

The solid catalyst system (SCS) used preferably has one or more of the following properties

(a) a pore volume measured according ASTM 4641 of less than 1.40 ml/g, and/or
(b) a surface area measured according to ASTM D 3663 of lower than 30 $m^2/g$, and/or
(c) a mean particle size d50 in the range of 20 to 200 $\mu$m.

More preferably the solid catalyst system (SCS) has preferably all of the above properties (a) to (c).

A remarkable feature of the used catalyst system (SCS) is that it is of solid form. In other words for the polymerization in the instant invention an heterogeneous catalysis is applied, i.e. the aggregate state (solid state) of the catalyst system (SCS) differs from the aggregate state of the reactants, i.e. the propylene and optionally other $\alpha$-olefins used. Different to known solid catalyst systems the solid catalyst system (SCS) used in the present invention is a so-called self-supported catalyst system, or in other words the solid catalyst system (SCS) used does not comprise an external support material. As mentioned above, the purpose of such "external support material" is that the active catalyst species are deposited on the solid support material and in the optional pores of said solid support material, respectively. Furthermore, external support material according to this invention is any material which is used to decrease solubility of the catalyst systems in media which are generally used in polymerization processes as well in common solvents like pentane, heptane and toluene. Typical inert external support materials are organic or inorganic support materials, like silica, $MgCl_2$ or porous polymeric material. These inert external support materials are generally used in amounts of at least 50 wt.-%, more preferably of at least 70 wt.-%.

The catalyst used in the present does not contain external support material as defined above. However, according to the present invention the solid catalyst system (SCS) may comprise catalytically inactive solid material used for forming voids as inclusions (IC) of the solid catalyst system (SCS). The amount of such catalytically inactive solid material for said voids of the inclusions is of 40 wt.-% or less, based on the solid catalyst system (SCS). This material for said voids of the inclusions (IC) does not act as support material, i.e. it is not used in order to get a solid catalyst system. This catalytically inactive solid material for said voids of the inclusions (IC) is present as a disperse phase within the solid catalyst system (SCS). Accordingly, the catalytically inactive solid material for said voids of the inclusions (IC) is dispersed during the preparation of the solid catalyst system (SCS). This catalytically inactive solid material for said voids of the inclusions (IC) is nano-sized as will be disclosed in more detail below.

Typically the solid catalyst system (SCS) has a surface area measured according to the commonly known BET method with $N_2$ gas as analysis adsorptive (ASTM D 3663) of less than 30 $m^2/g$, e.g. less than 20 $m^2/g$. In some embodiments the surface area is more preferably of less than 15 $m^2/g$, yet more preferably of less than 10 $m^2/g$. In some embodiments, the solid catalyst system (SCS) shows a surface area of 5 $m^2/g$ or less, which is the lowest detection limit with the methods used in the present invention.

The solid catalyst system (SCS) can be alternatively or additionally defined by the pore volume measured according to ASTM 4641. Thus it is appreciated that the solid catalyst system (SCS) has a pore volume of less than 1.0 ml/g. In some embodiments the pore volume is more preferably of less than 0.5 ml/g, still more preferably of less than 0.3 ml/g and even less than 0.2 ml/g. In another preferred embodiment the pore volume is not detectable when determined according to ASTM 4641.

Moreover the solid catalyst system (SCS) typically has a mean particle size (d50) of not more than 500 μm, i.e. preferably in the range of 2 to 500 μm, more preferably 5 to 200 μm. It is in particular preferred that the mean particle size (d50) is below 100 μm, still more preferably below 80 μm. A preferred range for the mean particle size (d50) is 5 to 80 μm, and in some embodiments 10 to 60 μm.

In a further embodiment the solid catalyst system (SCS) has a narrow particle size distribution. The SPAN value is an indicator for the broadness of particle size distribution. Accordingly it is preferred that the solid catalyst system (SCS) has a SPAN value below 2.0, i.e. in the range of 0.5 to below 2.0, like 0.7 to 1.5.

Furthermore, as stated above, the solid catalyst system (SCS) optionally comprises inclusions (IC). Inclusions (IC) in accordance with the present invention are not catalytically active and may be present in the form of hollow voids, in the form of liquid-filled hollow voids, in the form of hollow voids partially filled with liquid, in the form of solid material or in the form of hollow voids partially filled with solid material. In particular the inclusions (IC) are voids formed by a catalytically inactive solid material or in other words the inclusions (IC) are catalytically inactive solid material.

The catalytically inactive solid material for forming the voids as the inclusions (IC) of the solid catalyst system (SCS) of the invention is referred herein also shortly as "catalytically inactive solid material for voids".

Accordingly, if inclusions (IC) are present, then the solid catalyst system (SCS) preferably comprises catalytically inactive solid material for voids and optionally has a specific surface area below 500 $m^2/g$, and/or a mean particle size (d50) below 200 nm.

The expression "are not catalytically active" or "catalytically inactive" means that the solid material for voids as the inclusions (IC) does not react chemically with the active catalyst components and does not react chemically during the polymerization process of the polypropylene (PP). The catalytically inactive solid material for voids thus does not comprise, i.e. does not consist of, components and compounds, like transition metal compounds of group 3 to 10 of the periodic table (IUPAC), which has catalytic activity in polymerization processes.

Such a catalytically inactive solid material for voids is preferably (evenly) dispersed within the solid catalyst system (SCS). Accordingly the solid catalyst system (SCS) can be seen also as a matrix in which the catalytically inactive solid material for voids is dispersed, i.e. form a dispersed phase within the matrix phase of the solid catalyst system (SCS). The matrix is then constituted by the catalytically active components as defined herein, in particular by the transition metal compounds of groups 3 to 10 of the periodic table (IUPAC) (and optionally the metal compounds of groups 1 to 3 of the periodic table (IUPAC)). Of course all the other catalytic compounds as defined in the instant invention can additionally constitute to the matrix of the solid catalyst system (SCS) in which the catalytically inactive solid material for voids is dispersed.

As mentioned above, the catalytically inactive solid material for voids usually constitutes only a minor part of the total mass of the solid catalyst system (SCS). Accordingly the solid catalyst system (SCS) comprises up to 30 wt.-% catalytically inactive solid material for voids, more preferably up to 20 wt.-%. It is in particular preferred that the solid catalyst system (SCS) comprises the catalytically inactive solid material for voids, if present in the solid catalyst system (SCS), in the range of 1 to 30 wt.-%, more preferably in the range of 1 to 20 wt.-% and yet more preferably in the range of 1 to 10 wt.-%.

The catalytically inactive solid material for voids may be of any desired shape, including spherical as well as elongated shapes and irregular shapes. The catalytically inactive solid material for voids in accordance with the present invention may have a plate-like shape or they may be long and narrow, for example in the shape of a fiber.

Preferred catalytically inactive solid material for voids are inorganic materials as well as organic, in particular organic polymeric materials, suitable examples being nano-materials, such as silica, montmorillonite, carbon black, graphite, zeolites, alumina, as well as other inorganic particles, including glass nano-beads or any combination thereof. Suitable organic particles, in particular polymeric organic particles, are nano-beads made from polymers such as polystyrene, or other polymeric materials.

Accordingly it is particular preferred that the catalytically inactive solid material for voids is selected form spherical particles of nano-scale consisting of $SiO_2$, polymeric materials and/or $Al_2O_3$.

By nano-scale when discussing the catalytically inactive solid material for voids as inclusions (IC) of the solid catalyst system (SCS) is understood that the catalytically inactive solid material for voids has a mean particle size (d50) of equal or below 200 nm, more preferred equal or below 150 nm, still more preferred below 100 nm. Accordingly it is preferred that the catalytically inactive solid material for voids has a mean particle size (d50) of 10 to 200 nm, more preferred 10 to 100 nm, still more preferably from 10 to 90 nm, yet more preferred 10 to 80 nm.

Preferably, the catalytically inactive solid material for voids has a surface area below 500 $m^2/g$, more preferably below 450 $m^2/g$, yet more preferably below 300 $m^2/g$, or even below 100 $m^2/g$.

With regard to the solid catalyst system (SCS) comprising inclusions (IC) reference is made to WO 2007/077027 and EP 2 065 405, respectively.

In one preferable embodiment of the cable, preferably of the direct current (DC) cable, of the invention, a distribution of such inclusions (IC), preferably inclusions (IC) formed by voids, comprising, preferably consisting of, a catalytically inactive solid material, in the polypropylene (PP) is desired to contribute to the electrical properties oft he

polypropylene (PP), then the catalyst system (SCS) preferably contains said inclusions (IC).

The catalyst being part of the solid catalyst system can be either a Ziegler-Natta catalyst or a single-site catalyst.

The solid catalyst system (SCS), i.e. the solid Ziegler-Natta catalyst system or the solid single-site catalyst system is preferably obtained by

(a) providing a solution (S) comprising an organometallic compound of a transition metal of one of the groups 3 to 10 of the periodic table (IUPAC), preferably a transition metal of one of the groups 4 to 10 of the periodic table (IUPAC),
(b) forming a liquid/liquid emulsion system (E), which comprises said solution (S) as droplets dispersed in the continuous phase of the emulsion system (E),
(c) solidifying said dispersed phase (droplets) to form the solid catalyst system (SCS).

The above process steps (a) to (c) and the components of the embodiments of the solid Ziegler-Natta catalyst system and the solid single-site catalyst system of the catalyst system (SCS) invention are described below in more details.

<u>Solid Ziegler-Natta catalyst system</u>

The solid catalyst system (SCS) being a Ziegler-Natta catalyst system (in the following "solid ZN system") is preferably obtainable, i.e. obtained, by the preparation process of the solid catalyst system (SCS) as defined above or below, wherein

(a) preparing a solution of a complex (C) of a metal which is selected from one of the groups 1 to 3 of the periodic table (IUPAC) and an electron donor (E), said complex (C) is obtained by reacting a compound (CM) of said metal with said electron donor (E) or a precursor (EP) thereof in an organic solvent, and preparing a liquid or solution of a transition metal compound (CT)
(b) mixing said solution of complex (C) with said liquid or solution of transition metal compound (CT), obtaining thereby an emulsion of a continuous phase and an dispersed phase, said dispersed phase is in form of droplets and comprises the complex (C) and the transition metal compound (CT),
(d) solidifying the droplets of the dispersed phase obtaining thereby the solid catalyst system (SCS).

Step (a) of the preparation process of the solid ZN system, preferably comprises providing

(i) a solution of a complex (C) of a metal which is selected from one of the groups 1 to 3 of the periodic table (IUPAC) and an electron donor (E), said complex (C) is obtained by reacting a compound (CM) of said metal with said electron donor (E) or a precursor (EP) thereof,
and
(ii) a liquid transition metal of one of the groups 4 to 10 of the periodic table (IUPAC) compound (CT) or a solution of a transition metal compound (CT).

Accordingly one important aspect of the preparation of the solid ZN system is that neither the complex (C) nor the transition metal compound (CT) are present in solid form during the solid ZN system preparation, as it is the case for supported catalyst systems.

The catalytically inactive solid material for voids, if present, can be added to the system in step (a) during the preparation either of the components (i) or (ii) or in step (b) after contacting the components (i) and (ii) to form a liquid/liquid emulsion system (E) (= dispersed phase system), but before step (c) when solidifying the dispersed phase.

The solution of a complex (C) of the metal which is selected from one of the groups 1 to 3 of the periodic table (IUPAC) and the electron donor (E) is obtained by reacting a compound (CM) of said metal with said electron donor (E) or a precursor (EP) thereof in an organic solvent.

The metal compound (CM) used for the preparation of the complex (C) may be any metal compound (CM) which is selected from one of the groups 1 to 3 of the periodic table (IUPAC). However it is preferred that the complex (C) is a Group 2 metal complex, even more preferred a magnesium complex. Accordingly it is appreciated that the metal compound (CM) used in the preparation of said complex (C) is a Group 2 metal compound, like a magnesium compound.

Thus first a metal compound (CM) which is selected from one of the groups 1 to 3 of the periodic table (IUPAC), preferably from a Group 2 metal compound, like from a magnesium compound, containing preferably an alkoxy moiety is produced. More preferably the metal compound (CM) to be produced is selected from the group consisting of a Group 2 metal dialkoxide, like magnesium dialkoxide, a complex containing a Group 2 metal dihalide, like magnesium dihalide, and an alcohol, and a complex containing a Group 2 metal dihalide, like magnesium dihalide, and a Group 2 metal dialkoxide, like magnesium dialkoxide.

Thus the metal compound (CM) which is selected from one of the groups 1 to 3 of the periodic table (IUPAC),

preferably from the Group 2 metal compound, like from the magnesium compound, is usually titaniumless.

Most preferably, the magnesium compound is provided by reacting an alkyl magnesium compound and/or a magnesium dihalide with an alcohol. Thereby, at least one magnesium compound precursor, selected from the group consisting of a dialkyl magnesium $R_2Mg$, an alkyl magnesium alkoxide RMgOR, wherein each R is an identical or a different $C_1$ to $C_{20}$ alkyl, and a magnesium dihalide $MgX_2$, wherein X is a halogen, is reacted with at least one alcohol, selected from the group consisting of monohydric alcohols R'OH and polyhydric alcohols $R'(OH)_m$. According to one embodiment alcohol can contain an additional oxygen bearing moiety being different to a hydroxyl group, e.g. an ether group R' is a $C_1$ to $_{20}$ hydrocarbyl group and m is an integer selected from 2, 3 ,4 ,5 and 6, to give said magnesium compound (CM). R' is the same or different in the formulas R'OH and $R'(OH)_m$. The R of the dialkyl magnesium is preferably an identical or different $C_4$ to $C_{12}$ alkyl. Typical magnesium alkyls are ethylbutyl magnesium, dibutyl magnesium, dipropyl magnesium, propylbutyl magnesium, dipentyl magnesium, butylpentyl magnesium, butyloctyl magnesium and dioctyl magnesium. Typical alkyl-alkoxy magnesium compounds are ethyl magnesium butoxide, magnesium dibutoxide, butyl magnesium pentoxide, magnesium dipentoxide, octyl magnesium butoxide and octyl magnesium octoxide. Most preferably, one R is a butyl group and the other R of $R_2Mg$ is an octyl group, i.e. the dialkyl magnesium compound is butyl octyl magnesium.

The alcohol used in the reaction with the magnesium compound precursor as stated in the previous paragraph is a monohydric alcohol, typically $C_1$ to $C_{20}$ monohydric alcohols, a polyhydric (by definition including dihydric and higher alcohols) alcohol, each of which canoptionally contain an additional oxygen bearing moiety being different to a hydroxyl group, e.g. an ether group, like glycol monoethers, or a mixture of at least one monohydric alcohol and at least one polyhydric alcohol, Magnesium enriched complexes can be obtained by replacing a part of the monohydric alcohol with the polyhydric alcohol. In one embodiment it is preferred to use one monohydric alcohol only.

Typical monohydric alcohols are those of formula R'OH in which R' is a $C_2$ to $C_{16}$ alkyl group, most preferably a $C_4$ to $C_{12}$ alkyl group, like 2-ethyl-1-hexanol.

Typical polyhydric alcohols are ethylene glycol, propene glycol, trimethylene glycol, 1, 2-butylene glycol, 1, 3-butylene glycol, 1, 4-butylene glycol, 2, 3-butylene glycol, 1,5-pentanediol, 1,6-hexanediol, 1,8-octanediol, pinacol, diethylene glycol, triethylene glycol, glycerol, trimethylol propane and pentaerythritol. Most preferably the polyhydric alcohol is selected from the group consisting of ethylene glycol, 2-butyl-2-ethyl-1, 3-propanediol and glycerol.

The reaction conditions used to obtain the metal compound (CM) which is selected from one of the groups 1 to 3 of the periodic table (IUPAC), preferably the metal compound (CM) of Group 2, even more preferred the magnesium compound, may vary according to the used reactants and agents. However according to one embodiment of the present invention, said magnesium compound precursor is reacted with said at least one alcohol at temperature of 30 to 80 °C for 10 to 90 min, preferably about 30 min.

After having obtained the metal compound (CM) which is selected from one of the groups 1 to 3 of the periodic table (IUPAC), preferably the metal compound of Group 2, even more preferred the magnesium compound, said compound (CM) is further reacted with an electron donor (E) or electron donor precursor (EP) as known in the prior art. The electron donor (E) is preferably a mono- or diester of a carboxylic acid or diacid, or an ether compound. Said carboxylic acid ester or diester, e.g. the mono- or diester of the aromatic or aliphatic, saturated or unsaturated carboxylic acid or diacid, can be formed in situ by reaction of an carboxylic acid halide or diacid halide, i.e. a preferred electron donor precursor (EP), with a $C_2$ to $C_{16}$ alkanol and/or diol, optionally containing an additional oxygen bearing moiety being different to a hydroxyl group, e.g. an ether group. Preferably said metal compound (CM) reacts with an electron donor precursor (EP), i.e. with a dicarboxylic acid dihalide having preferably the formula (I)

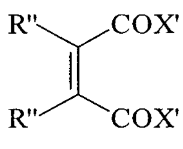

wherein

each R" is an identical or different $C_1$ to $C_{20}$ hydrocarbyl group or both R"s form together with the two unsaturated carbons seen in the formula (I) a $C_5$ to $C_{20}$ saturated or unsaturated aliphatic or aromatic ring, and
X' is a halogen
to give the complex (C).

Among non-aromatic dicarboxylic acid dihalides, the group consisting of maleic acid dihalide, fumaric acid dihalide and their R" substituted derivatives such as citraconic acid dihalide and mesaconic acid dihalide, respectively, are the most important.

Among the cyclic, aliphatic or aromatic, dicarboxylic acid dihalides, the group consisting of phthalic acid dihalide

(1,2-benzene dicarboxylic acid dihalide), its hydrogenate 1,2-cyclohexane dicarboxylic acid dihalide, and their derivatives, are the most important. Commonly used dicarboxylic acid dihalide is phthaloyl dichloride.

Preferably the magnesium compound is reacted with the dicarboxylic acid halide in a molar ratio $Mg_{total\ added}$/dicarboxylic acid halide of 1 : 1 and 1 : 0.1, preferably between 1 : 0. 6 and 1 : 0. 25.

Preferably the metal compound (CM) which is selected from one of the groups 1 to 3 of the periodic table (IUPAC), more preferably the metal compound of Group 2, even more preferably the magnesium compound, is reacted with the electron donor (E) or with the electron donor precursor (EP), i.e. the dicarboxylic acid dihalide, under at least one of the following conditions:

- adding said dicarboxylic acid dihalide under room temperature and
- heating the obtained reaction mixture to a temperature of 20 to 80 °C, preferably of 50 to 70 °C
- keeping the temperature for 10 to 90 min, preferably for 25 to 35 min.

The organic solvent used for the preparation of the complex (C) can be any organic solvent as long as it is ensured that the complex (C) is dissolved at ambient temperatures, i.e. at temperatures up to 80 °C (20 to 80 °C). Accordingly it is appreciated that the organic solvent comprises, preferably consists of, $C_5$ to $C_{10}$ hydrocarbon, more preferably of a $C_6$ to $C_{10}$ aromatic hydrocarbon, like toluene.

Suitable transition metal compounds (CT) are in particular transition metal compounds (CT) of transition metals of groups 4 to 6, in particular of group 4 or 5, of the periodic table (IUPAC). Suitable examples include Ti and V, in particular preferred is a compound of Ti, like $TiCl_4$.

In addition to the compounds described above, the catalyst component can comprise e.g. reducing agents, like compounds of group 13, preferably Al-compounds containing alkyl and/or alkoxy residues, and optionally halogen residues. These compounds can be added into the catalyst preparation at any step before the final recovery.

After preparing (i) the solution of the complex (C) and (ii) the liquid of the transition metal compound (CT) or the solution of the transition metal compound (CT) in step (a) of the preparation process of the solid ZN system, said (i) and (ii) from the step (a) are contacted in step (b) to form a liquid/liquid emulsion system (E).

In step (b) of the preparation process of the solid ZN system the solution of the complex (C) (i) is contacted with a liquid or solution of the transition metal compound (CT). Due to the contact of the solution of the complex (C) (i) with the liquid/solution transition metal compound (CT) (ii) an emulsion is formed. The production of a two-phase, i.e. of an emulsion, is encouraged by carrying out the contacting at low temperature, specifically above 10 °C but below 60 °C, preferably between above 20 °C and below 50 °C. The emulsion comprises a continuous phase and a dispersed phase in form of droplets. In the dispersed phase the complex (C) as well as the transition metal compound (CT) are present.

Additional catalyst components, like an aluminium compound, like aluminium alkyl, aluminium alkyl halide or aluminium alkoxy or aluminium alkoxy alkyl or halide or other compounds acting as reducing agents can be added to the emulsion at any step before the solidification step (c) of the preparation process of the solid catalyst system (SCS). Further, during the preparation, any agents enhancing the emulsion formation can be added. As examples can be mentioned emulsifying agents or emulsion stabilisers e.g. surfactants, like acrylic or metacrylic polymer solutions and turbulence minimizing agents, like alpha-olefin polymers without polar groups, like polymers of alpha olefins of 6 to 20 carbon atoms.

Suitable processes for mixing the obtained emulsion include the use of mechanical as well as the use of ultrasound for mixing, as known to the skilled person. The process parameters, such as time of mixing, intensity of mixing, type of mixing, power employed for mixing, such as mixer velocity or wavelength of ultrasound employed, viscosity of solvent phase, additives employed, such as surfactants, etc. are used for adjusting the size of the solid ZZ system particles.

In the solidification step (c) of the preparation process of the solid ZN system as defined above or below, the solidification of the dispersed droplets of the catalyst particles is carried out by heating (for instance at a temperature of 70 to 150 °C, more preferably at 90 to 110 °C). The obtained solid ZN system particles are then separated and recovered in usual manner. In this connection reference is made to the disclosure of WO 03/000754, WO 03/000757, and WO 2007/077027 as well as to the European patent application EP 2 065 405. WO 2007/077027 and EP 2 065 405 provide in particular information as to how solid ZN systems containing the optional inclusions (IC) are obtainable. This disclosure is incorporated herein by reference. The catalyst particles obtained may furthermore be subjected to further post-processing steps, such as washing, stabilizing, prepolymerization, prior to the final use in polymerisation process.

As well known, the obtained solid ZN system can be combined before or during the polypropylene (PP) polymerization process with other catalyst species used in a polypropylene polymerization process, e.g. with a conventional cocatalyst, e.g. those based on compounds of group 13 of the periodic table (IUPAC), e.g. organo aluminum, such as aluminum compounds, like aluminum alkyl, aluminum halide or aluminum alkyl halide compounds (e.g. triethylaluminum) compounds, can be mentioned.

Also as well known, additionally one or more external donors can be used which may be typically selected e.g. from silanes or any other well-known external donors in the field. External donors are known in the art and are used as stereoregulating agent in propylene polymerization. The external donors are preferably selected from hydrocarbyloxy silane compounds and hydrocarbyloxy alkane compounds.

Typical hydrocarbyloxy silane compounds have the formula (II)

$$R'_{0}Si(OR")_{4-0} \qquad (II)$$

wherein

R' is an a- or b-branched C3-C12-hydrocarbyl,
R" a C1-C12-hydrocarbyl, and
0 is an integer 1-3.

More specific examples of the hydrocarbyloxy silane compounds which are useful as external electron donors in the invention are diphenyldimethoxy silane, dicyclopentyldimethoxy silane, dicyclopentyldiethoxy silane, cyclopentylmethyldimethoxy silane, cyclopentylmethyldiethoxy silane, dicyclohexyldimethoxy silane, dicyclohexyldiethoxy silane, cyclohexylmethyldimethoxy silane, cyclohexylmethyldiethoxy silane, methylphenyldimethoxy silane, diphenyldiethoxy silane, cyclopentyltrimethoxy silane, phenyltrimethoxy silane, cyclopentyltriethoxy silane, phenyltriethoxy silane. Most preferably, the alkoxy silane compound having the formula (II) is dicyclopentyl dimethoxy silane or cyclohexylmethyl dimethoxy silane.

Solid Single-site catalyst system

The solid catalyst system (SCS) being a single-site catalyst system (in the following "solid SSC system") is preferably obtainable, i.e. obtained, by the preparation process of the solid catalyst system (SCS) as defined above or below, wherein, as mentioned above, the preparation process involves (a) preparing a solution of one or more catalyst components; (b) dispersing said solution in a solvent to form a liquid/liquid emulsion system (E) in which said one or more catalyst components are present in the droplets of the dispersed phase; (c) solidifying the catalyst components in the dispersed droplets, in the absence of an external support, to form the solid SSC system particles, and optionally recovering said particles.

Step (a) of the preparation process of the solid SSC system, preferably comprises contacting

(i) a transition metal compound of formula (III)

$$L_mR_nMX_q \qquad (III)$$

wherein

"M" is a transition metal of anyone of the groups 3 to 10 of the periodic table (IUPAC),
each "X" is independently a monovalent anionic σ-ligand,
each "L" is independently an organic ligand which coordinates to the transition metal (M),
"R" is a bridging group linking two organic ligands (L),
"m" is 2 or 3,
"n" is 0, 1 or 2,
"q" is 1,2 or 3,
m+q is equal to the valency of the transition metal (M),

optionally, and preferably with
(ii) a cocatalyst (Co) comprising an element (E) of group 13 of the periodic table (IUPAC), preferably a cocatalyst (Co) comprising a compound of Al.

More preferably the solid SSC system prepared in the catalyst preparation process of the invention comprises

(i) a transition metal compound of formula (IV)

$$R_n(Cp')_2MX_2 \qquad (IV)$$

wherein

"M" is zirconium (Zr) or hafnium (Hf),
each "X" is independently a monovalent anionic σ-ligand,
each "Cp' " is a cyclopentadienyl-type organic ligand independently selected from the group consisting of substituted cyclopentadienyl, substituted indenyl, substituted tetrahydroindenyl, and substituted or unsubstituted fluorenyl, said organic ligands coordinate to the transition metal (M),
"R" is a bivalent bridging group linking said organic ligands (Cp'),
"n" is 1 or 2, preferably 1, and

(b) optionally a cocatalyst (Co) comprising an element (E) of group 13 of the periodic table (IUPAC), preferably a cocatalyst (Co) comprising a compound of Al.

Preferably the transition metal (M) used for the catalyst system preparation of is zirconium (Zr) or hafnium (Hf), preferably zirconium (Zr).

The term "σ-ligand" is understood in the whole section "solid single-site catalyst system" in a known manner, i.e. a group bound to the metal via a sigma bond. Thus the anionic ligands "X" can independently be halogen or be selected from the group consisting of R', OR', $SiR'_3$, $OSiR'_3$, $OSO_2CF_3$, OCOR', SR', $NR'_2$ or $PR'_2$ group wherein R' is independently hydrogen, a linear or branched, cyclic or acyclic, $C_1$ to $C_{20}$ alkyl, $C_2$ to $C_{20}$ alkenyl, $C_2$ to $C_{20}$ alkynyl, $C_3$ to $C_{12}$ cycloalkyl, $C_6$ to $C_{20}$ aryl, $C_7$ to $C_{20}$ arylalkyl, $C_7$ to $C_{20}$ alkylaryl, $C_8$ to $C_{20}$ arylalkenyl, in which the R' group can optionally contain one or more heteroatoms belonging to groups 14 to 16. In a preferred embodiments the anionic ligands "X" are identical and either halogen, like Cl, or methyl or benzyl.

A preferred monovalent anionic ligand is halogen, in particular chlorine (Cl).

The substituted cyclopentadienyl-type ligand(s) may have one or more substituent(s) being selected from the group consisting of halogen, hydrocarbyl (e.g. $C_1$ to $C_{20}$ alkyl, $C_2$ to $C_{20}$ alkenyl, $C_2$ to $C_{20}$ alkynyl, $C_3$ to $C_{20}$ cycloalkyl, like $C_1$ to $C_{20}$ alkyl substituted $C_5$ to $C_{20}$ cycloalkyl, $C_6$ to $C_{20}$ aryl, $C_5$ to $C_{20}$ cycloalkyl substituted $C_1$ to $C_{20}$ alkyl wherein the cycloalkyl residue is substituted by $C_1$ to $C_{20}$ alkyl, $C_7$ to $C_{20}$ arylalkyl, $C_3$ to $C_{12}$ cycloalkyl which contains 1, 2, 3 or 4 heteroatom(s) in the ring moiety, $C_6$ to $C_{20}$-heteroaryl, $C_1$ to $C_{20}$-haloalkyl), $-SiR''_3$, -SR", $-PR''_2$, -OR" or $-NR''_2$, each R" is independently a hydrogen or hydrocarbyl (e.g. $C_1$ to $C_{20}$ alkyl, $C_1$ to $C_{20}$ alkenyl, $C_2$ to $C_{20}$ alkynyl, $C_3$ to $C_{12}$ cycloalkyl, or $C_6$ to $C_{20}$ aryl) or e.g. in case of $-NR''_2$, the two substituents R" can form a ring, e.g. five-or six-membered ring, together with the nitrogen atom wherein they are attached to.

Further "R" of formula (IV) is preferably a bridge of 1 to 4 atoms, such atoms being independently carbon (C), silicon (Si), germanium (Ge) or oxygen (O) atom(s), whereby each of the bridge atoms may bear independently substituents, such as $C_1$ to $C_{20}$-hydrocarbyl, tri($C_1$ to $C_{20}$-alkyl)silyl, tri($C_1$ to $C_{20}$-alkyl)siloxy and more preferably "R" is a one atom bridge like e.g. $-SiR'''_2-$, wherein each R''' is independently $C_1$ to $C_{20}$-alkyl, $C_2$ to $C_{20}$-alkenyl, $C_2$ to $C_{20}$-alkynyl, $C_3$ to $C_{12}$ cycloalkyl, $C_6$ to $C_{20}$-aryl, alkylaryl or arylalkyl, or tri($C_1$ to $C_{20}$ alkyl)silyl- residue, such as trimethylsilyl-, or the two R''' can be part of a ring system including the Si bridging atom.

In a preferred embodiment the transition metal compound used for the catalyst system preparation has the formula (V)

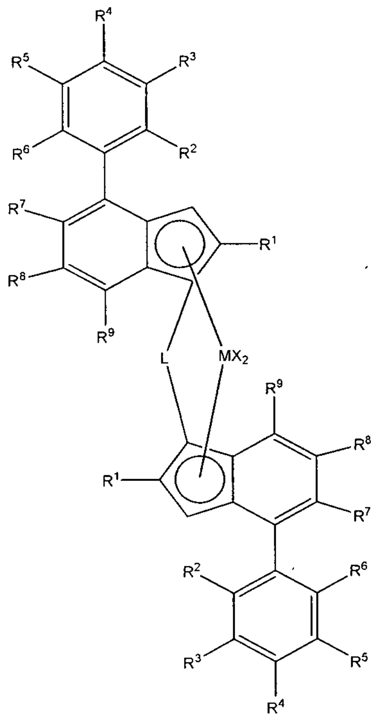

wherein

M is zirconium (Zr) or hafnium (Hf), preferably zirconium (Zr),

X are ligands with a σ-bond to the metal "M", preferably those as defined above for formula (I), preferably chlorine (Cl) or methyl ($CH_3$), the former especially preferred,

$R^1$ are equal to or different from each other, preferably equal to, and are selected from the group consisting of linear saturated $C_1$ to $C_{20}$ alkyl, linear unsaturated $C_1$ to $C_{20}$ alkyl, branched saturated $C_1$-$C_{20}$ alkyl, branched unsaturated $C_1$ to $C_{20}$ alkyl, $C_3$ to $C_{20}$ cycloalkyl, $C_6$ to $C_{20}$ aryl, $C_7$ to $C_{20}$ alkylaryl, and $C_7$ to $C_{20}$ arylalkyl, optionally containing one or more heteroatoms of groups 14 to 16 of the Periodic Table (IUPAC),
preferably are equal to or different from each other, preferably equal to, and are $C_1$ to $C_{10}$ linear or branched hydrocarbyl, more preferably are equal to or different from each other, preferably equal to, and are $C_1$ to $C_6$ linear or branched alkyl,

$R^2$ to $R^6$ are equal to or different from each other and are selected from the group consisting of hydrogen, linear saturated $C_1$-$C_{20}$ alkyl, linear unsaturated $C_1$-$C_{20}$ alkyl, branched saturated $C_1$-$C_{20}$ alkyl, branched unsaturated $C_1$-$C_{20}$ alkyl, $C_3$-$C_{20}$ cycloalkyl, $C_6$-$C_{20}$ aryl, $C_7$-$C_{20}$ alkylaryl, and $C_7$-$C_{20}$ arylalkyl, optionally containing one or more heteroatoms of groups 14 to 16 of the Periodic Table (IUPAC),
preferably are equal to or different from each other and are $C_1$ to $C_{10}$ linear or branched hydrocarbyl, more preferably are equal to or different from each other and are $C_1$ to $C_6$ linear or branched alkyl,

$R^7$ and $R^8$ are equal to or different from each other and selected from the group consisting of hydrogen, linear saturated $C_1$ to $C_{20}$ alkyl, linear unsaturated $C_1$ to $C_{20}$ alkyl, branched saturated $C_1$ to $C_{20}$ alkyl, branched unsaturated $C_1$ to $C_{20}$ alkyl, $C_3$ to $C_{20}$ cycloalkyl, $C_6$ to $C_{20}$ aryl, $C_7$ to $C_{20}$ alkylaryl, $C_7$ to $C_{20}$ arylalkyl, optionally containing one or more heteroatoms of groups 14 to 16 of the Periodic Table (IUPAC), $SiR^{10}_3$, $GeR^{10}_3$, $OR^{10}$, $SR^{10}$ and $NR^{10}_2$, wherein
$R^{10}$ is selected from the group consisting of linear saturated $C_1$-$C_{20}$ alkyl, linear unsaturated $C_1$ to $C_{20}$ alkyl, branched saturated $C_1$ to $C_{20}$ alkyl, branched unsaturated $C_1$ to $C_{20}$ alkyl, $C_3$ to $C_{20}$ cycloalkyl, $C_6$ to $C_{20}$ aryl, $C_7$ to $C_{20}$ alkylaryl, and $C_7$ to $C_{20}$ arylalkyl, optionally containing one or more heteroatoms of groups 14 to 16 of the Periodic Table (IUPAC),and/or
$R^7$ and $R^8$ being optionally part of a $C_4$ to $C_{20}$ carbon ring system together with the indenyl carbons to which they are attached, preferably a $C_5$ ring, optionally one carbon atom can be substituted by a nitrogen, sulfur or oxygen atom,

$R^9$ are equal to or different from each other and are selected from the group consisting of hydrogen, linear saturated $C_1$ to $C_{20}$ alkyl, linear unsaturated $C_1$ to $C_{20}$ alkyl, branched saturated $C_1$ to $C_{20}$ alkyl, branched unsaturated $C_1$ to $C_{20}$ alkyl, $C_3$ to $C_{20}$ cycloalkyl, $C_6$ to $C_{20}$ aryl, $C_7$ to $C_{20}$ alkylaryl, $C_7$ to $C_{20}$ arylalkyl,

$OR^{10}$, and $SR^{10}$,
preferably $R^9$ are equal to or different from each other and are H or $CH_3$,
wherein
$R^{10}$ is defined as before,

L is a bivalent group bridging the two indenyl ligands, preferably being a $C_2R^{11}{}_4$ unit or a $SiR^{11}{}_2$ or $GeR^{11}{}_2$, wherein,
$R^{11}$ is selected from the group consisting of H, linear saturated $C_1$ to $C_{20}$ alkyl, linear unsaturated $C_1$ to $C_{20}$ alkyl, branched saturated $C_1$ to $C_{20}$ alkyl, branched unsaturated $C_1$ to $C_{20}$ alkyl, $C_3$ to $C_{20}$ cycloalkyl, $C_6$ to $C_{20}$ aryl, $C_7$ to $C_{20}$ alkylaryl or $C_7$ to $C_{20}$ arylalkyl, optionally containing one or more heteroatoms of groups 14 to 16 of the Periodic Table (IUPAC),preferably $Si(CH_3)_2$, $SiCH_3C_6H_{11}$, or $SiPh_2$, wherein $C_6H_{11}$ is cyclohexyl.

Preferably the transition metal compound of formula (V) is $C_2$-symmetric or pseudo-$C_2$-symmetric. Concerning the definition of symmetry it is referred to Resconi et al. Chemical Reviews, 2000, Vol. 100, No. 4 1263 and references herein cited.

Preferably the residues $R^1$ are equal to or different from each other, more preferably equal, and are selected from the group consisting of linear saturated $C_1$ to $C_{10}$ alkyl, linear unsaturated $C_1$ to $C_{10}$ alkyl, branched saturated $C_1$ to $C_{10}$ alkyl, branched unsaturated $C_1$ to $C_{10}$ alkyl and $C_7$ to $C_{12}$ arylalkyl. Even more preferably the residues $R^1$ are equal to or different from each other, more preferably equal, and are selected from the group consisting of linear saturated $C_1$ to $C_6$ alkyl, linear unsaturated $C_1$ to $C_6$ alkyl, branched saturated $C_1$ to $C_6$ alkyl, branched unsaturated $C_1$ to $C_6$ alkyl and $C_7$ to $C_{10}$ arylalkyl. Yet more preferably the residues $R^1$ are equal to or different from each other, more preferably equal, and are selected from the group consisting of linear or branched $C_1$ to $C_4$ hydrocarbyl, such as for example methyl or ethyl.

Preferably the residues $R^2$ to $R^6$ are equal to or different from each other and linear saturated $C_1$ to $C_4$ alkyl or branched saturated $C_1$ to $C_4$ alkyl. Even more preferably the residues $R^2$ to $R^6$ are equal to or different from each other, more preferably equal, and are selected from the group consisting of methyl, ethyl, iso-propyl and tert-butyl.

Preferably $R^7$ and $R^8$ are equal to or different from each other and are selected from hydrogen and methyl, or they are part of a 5-methylene ring including the two indenyl ring carbons to which they are attached. In another preferred embodiment, $R^7$ is selected from $OCH_3$ and $OC_2H_5$, and $R^8$ is tert-butyl.

Examples of useful transition metal compounds are rac-methyl(cyclohexyl)silanediyl bis(2-methyl-4-(4-tert-butylphenyl)indenyl)zirconium dichloride; rac-dimethylsilanediyl bis(2-methyl-4-phenyl-1,5,6,7-tetrahydro-s-indacen-1-yl)zirconium dichloride and rac-dimethylsilanediyl bis(2-methyl-4-phenyl-5-methoxy-6-tert-butylindenyl)zirconium dichloride.

In the preferred preparation process of the solid SSC system as defined above or below, (i) the transition metal compound is contacted with (ii) a cocatalyst (Co) comprising an element (E) of group 13 of the periodic table (IUPAC), for instance the cocatalyst (Co) comprises a compound of Al.

Examples of such cocatalyst (Co) are organo aluminium compounds, such as aluminoxane compounds.

Such compounds of Al, preferably aluminoxanes, can be used as the only compound in the cocatalyst (Co) or together with other cocatalyst compound(s). Thus besides or in addition to the compounds of Al, i.e. the aluminoxanes, other cation complex forming cocatalyst compounds, like boron compounds can be used. Said cocatalysts are commercially available or can be prepared according to the prior art literature. Preferably however in the preparation process of the solid SSC catalyst system only compounds of Al as cocatalyst (Co) are employed.

In particular preferred cocatalysts (Co) are the aluminoxanes, in particular the C1 to C10-alkylaluminoxanes, most particularly methylaluminoxane (MAO).

By the term "preparing a solution of one or more catalyst components" is meant that the catalyst forming compounds may be combined in one solution which is dispersed to an immiscible solvent, or, alternatively, at least two separate catalyst solutions for each part of the catalyst forming compounds may be prepared, which are then dispersed in step (b) successively to the solvent.

In a preferred method for forming the catalyst at least two separate solutions for each or part of said catalyst may be prepared, which are then dispersed in step (b) successively to the immiscible solvent.

A solvent may be employed to form the solution of the catalyst component (s). Said solvent is chosen so that it dissolves said catalyst component (s). The solvent can be preferably an organic solvent such as used in the field, comprising an optionally substituted hydrocarbon such as linear or branched aliphatic, alicyclic or aromatic hydrocarbon, such as a linear or cyclic alkane, an aromatic hydrocarbon and/or a halogen containing hydrocarbon.

Examples of aromatic hydrocarbons are toluene, benzene, ethylbenzene, propylbenzene, butylbenzene and xylene. Toluene is a preferred solvent. The solution may comprise one or more solvents. Such a solvent can thus be used to facilitate the emulsion formation, and usually does not form part of the solidified particles, but e.g. is removed after the solidification step together with the continuous phase.

The formation of solution can be effected at a temperature of 0 to 100°C, e.g. at 20 to 80°C.

Step (b) of the preparation process of the solid SSC system, comprises preferably combining the solution of the complex comprising the transition metal compound and the cocatalyst with an inert solvent, to form an emulsion, wherein said inert solvent forms the continuous liquid phase and the solution comprising the catalyst components (i) and (ii) forms the dispersed phase (discontinuous phase) in the form of dispersed droplets.

The principles for preparing two phase emulsion systems are known in the chemical field. Thus, in order to form the two phase liquid system, the solution of the catalyst component (s) and the solvent used as the continuous liquid phase have to be essentially immiscible at least during the dispersing step. The term "immiscible with the catalyst solution" means that the solvent (continuous phase) is fully immiscible or partly immiscible i.e. not fully miscible with the dispersed phase solution. This can be achieved in a known manner e.g. by choosing said two liquids and/or the temperature of the dispersing step/solidifying step accordingly.

Further preferably said solvent is inert in relation to said compounds. The term "inert in relation to said compounds" means herein that the solvent of the continuous phase is chemically inert, i.e. undergoes no chemical reaction with any catalyst forming component. It is further preferable that the solvent of said continuous phase does not contain dissolved therein any significant amounts of catalyst forming compounds. Thus, the solid particles of the SSC system are formed in step (c) in the droplets from the compounds which originate from the solution(s) obtained from step (a) and dispersed in the step (b) into the continuous phase).

In a preferred embodiment said solvent forming the continuous phase is a halogenated organic solvent or mixtures thereof, preferably fluorinated organic solvents and particularly semi, highly or perfluorinated organic solvents and functionalised derivatives thereof. Examples of the above-mentioned solvents are semi, highly or perfluorinated hydrocarbons, such as alkanes, alkenes and cycloalkanes, ethers, e.g. perfluorinated ethers and amines, particularly tertiary amines, and functionalised derivatives thereof. Preferred are semi, highly or perfluorinated, particularly perfluorinated hydrocarbons, e.g. perfluorohydrocarbons of e.g. C3-C30, such as C4-C10. Specific examples of suitable perfluoroalkanes and perfluorocycloalkanes include perfluoro-hexane, -heptane, -octane and - (methylcyclohexane). Semi fluorinated hydrocarbons relates particularly to semifluorinated n-alkanes, such as perfluoroalkyl-alkane. "Semi fluorinated" hydrocarbons also include such hydrocarbons wherein blocks of -C-F and -C-H alternate. "Highly fluorinated" means that the majority of the -C-H units are replaced with -C-F units. "Perfluorinated" means that all - C-H units are replaced with -C-F units. For fluorinated hydrocarbons, see the articles of A. Enders and G. Maas in "Chemie in unserer Zeit", 34. Jahrg. 2000, Nr.6, and of Pierandrea Lo Nostro in "Advances in Colloid and Interface Science", 56 (1995) 245-287, Elsevier Science.

The emulsion can be formed by any means known in the art: by mixing, such as by stirring said solution vigorously to said solvent forming the continuous phase or by means of mixing mills, or by means of ultra-sonic wave, or by using a so called phase change method for preparing the emulsion by first forming a homogeneous system which is then transferred by changing the temperature of the system to a biphasic system so that droplets will be formed.

The two phase state is maintained during the emulsion formation step and the solidification step, as, for example, by appropriate stirring. Furthermore, the particle size of the catalyst particles of the invention can be controlled by the size of the droplets in the solution, and spherical particles with an uniform particle size distribution can be obtained.

Additionally, emulsifying agents/emulsion stabilisers, e.g. surfactants, can be used, preferably in a manner known in the art, for facilitating the formation and/or stability of the emulsion.

The dispersion step may be effected at -20 °C to 100°C, e.g. at about -10 to 70°C, such as at -5 to 30°C, e.g. around 0 °C.

Step (c) of the preparation process of the solid SSC system, preferably comprises solidifying the droplets formed in step (b) to form solid catalyst particles. The obtained solid particles are then separated from the liquid and optionally washed and/or dried.

The term "solidification" is used herein for forming free flowing solid catalyst particles in the absence of an external porous particulate carrier, such as silica. Said step can be effected in various ways, e.g. by causing or accelerating the formation of said solid catalyst forming reaction products of the compounds present in the droplets. This can be effected, depending on the used compounds and/or the desired solidification rate, with or without an external stimulus, such as a temperature change of the system. In a particularly preferred embodiment, the solidification is effected after the emulsion system is formed by subjecting the system to an external stimulus, such as a temperature change. Temperature differences of e.g. 5 to 100°C, such as 10 to 100°C, or 20 to 90°C, such as 50 to 90°C. The emulsion system may be subjected to a rapid temperature change to cause a fast solidification in the dispersed system. The dispersed phase may e.g. be subjected to an immediate (within milliseconds to few seconds) temperature change in order to achieve an instant solidification of the component (s) within the droplets. The appropriate temperature change, i.e. an increase or a decrease in the temperature of an emulsion system naturally depends on the emulsion system, i.e. on the used compounds and the concentrations/ratios thereof, as well as on the used solvents, and is chosen accordingly. It is also evident that any techniques may be used to provide sufficient heating or cooling effect to the dispersed system to cause the desired solidification. In one embodiment the heating or cooling effect is obtained by bringing the emulsion

system with a certain temperature to an inert receiving medium with significantly different temperature, e.g. as stated above, whereby said temperature change of the emulsion system is sufficient to cause the rapid solidification of the droplets. The receiving medium can be gaseous, e.g. air, or a liquid, preferably a solvent, or a mixture of two or more solvents, wherein the catalyst component (s) is (are) immiscible and which is inert in relation to the catalyst component (s). The solidification step is preferably carried out at about 60 to 80 °C, preferably at about 70 to 80 °C, (below the boiling point of the solvents).

The recovered solid SSC system particles can be used, after an optional washing step, in a polymerisation process of an olefin. Alternatively, the separated and optionally washed solid particles can be dried to remove any solvent present in the particles before use in the polymerisation step. The separation and optional washing steps can be effected in a known manner, e.g. by filtration and subsequent washing of the solids with a suitable solvent.

As to the preparation process of the SSC system reference is made to WO 03/051934. In case the solid SSC system shall comprise inclusions (IC), reference is made to WO 2007/077027.

Polymerization process:

The polymerization process for producing the polypropylene (PP) as defined in the instant invention can be any known process, with the proviso that the solid catalyst system (SCS) as defined herein is employed.

Accordingly propylene and optionally ethylene and/or at least one $C_4$ to $C_{12}$ $\alpha$-olefin is/are polymerized in the presence of the solid catalyst system (SCS) to obtain the polypropylene (PP) as defined in the instant invention. More precisely the process for the manufacture of the instant polypropylene (PP) can be a single stage process using a bulk phase, slurry phase or gas phase reactor. However it is preferred that the polypropylene (PP) is produced in a multistage process in which the solid catalyst system (SCS) of the instant invention is employed.

Accordingly in a first reactor system propylene and optionally ethylene and/or at least one $C_4$ to $C_{12}$ a-olefin are polymerized in the presence of a solid catalyst system (SCS) to produce the propylene homopolymer (H-PP) and/or the random propylene copolymer (R-PP) as defined in the instant invention. The first reactor system according to this invention may comprise one reactor, like a slurry phase (loop reactor) or gas phase reactor, or more reactors, like two or three reactors. It is however preferred that the propylene homopolymer (H-PP) and/or the random propylene copolymer (R-PP) is produced in a multistage process (first reactor system) in which the solid catalyst system (SCS) of the instant invention is employed.

In case the polypropylene (PP) is a heterophasic propylene copolymer (HECO) of the instant invention, the propylene homopolymer (H-PP) and/or the random propylene copolymer (R-PP) of the first reactor system is subsequently transferred into the second reactor system, to polymerize in the second reactor system propylene and ethylene and/or at least one $C_4$ to $C_{12}$ $\alpha$-olefin, to produce the elastomeric propylene copolymer (E), obtaining thereby the heterophasic propylene copolymer (HECO) in which the elastomeric propylene copolymer (E) is dispersed in the propylene homopolymer (H-PP) and/or in the random propylene copolymer (R-PP). Preferably the second reactor system comprises one or two reactors, preferably of one reactor. It is in particular preferred that the reactor(s) of the second reactor system is/are gas phase reactor(s).

Accordingly for the propylene homopolymer (H-PP) and the random propylene copolymer (R-PP) as well as for the heterophasic propylene copolymer (HECO), a multistage process is preferred.

A preferred multistage process is a process comprising at least one slurry phase and at least one gas phase reactor, preferably at least two gas phase reactors, such as developed by Borealis and known as the Borstar® technology. In this respect, reference is made to EP 0 887 379 A1, WO 92/12182, WO 2004/000899, WO 2004/111095, WO 99/24478, WO 99/24479 and WO 00/68315. They are incorporated herein by reference.

A further suitable slurry-gas phase process or slurry-gas-gas phase is the Spheripol® process of Basell.

Preferably the polypropylene (PP) or the heterophasic propylene copolymer (HECO) is produced in the Spheripol® or in the Borstar®-PP process.

Accordingly in a first step the propylene homopolymer (H-PP) or the random propylene copolymer (R-PP) is prepared by polymerizing, in a slurry reactor, for example a loop reactor, propylene optionally together with at least another $C_2$ to $C_{12}$ a-olefin (comonomers), in the presence of the solid catalyst system (SCS) to produce a first part (A) of the propylene homopolymer (H-PP) and/or the random propylene copolymer (R-PP). This part is then transferred, preferably together with the solid catalyst system (SC), to a subsequent gas phase reactor, wherein in the gas phase reactor propylene is reacted optionally together with comonomers as defined above in order to produce a further part (B) in the presence of the reaction product of the first step. This reaction sequence provides a reactor blend of two parts (part (A) and part (B)) constituting the propylene homopolymer (H-PP) and/or the random propylene copolymer (R-PP). It is of course possible by the present invention that the first reaction is carried out in a gas phase reactor while the second polymerization reaction is carried out in a slurry reactor, for example a loop reactor. It is furthermore also possible to reverse the order of producing part (A) and (B), which has been described above in the order of first producing part (A) and then producing part (B). The above-discussed process, comprising at least two polymerization steps, is advantageous in view of the fact that it provides easily controllable reaction steps enabling the preparation of a desired reactor blend. It is also possible that the first reactor system comprises a third reactor, i.e. a second gas phase reactor. The polymerization steps may be adjusted, for example by appropriately selecting monomer feed, comonomer feed, hydrogen feed, temperature and pressure in order to suitably adjust the properties of the polymerization products obtained.

In case the heterophasic propylene copolymer (HECO) is produced, the propylene homopolymer (H-PP) and/or the random propylene copolymer (R-PP) of the first reactor system is transferred to a second reactor system, i.e. a further reactor, preferably a gas phase reactor. In this reactor the elastomeric propylene copolymer (E) is produced by polymerizing propylene together with at least another $C_2$ to $C_{10}$ $\alpha$-olefin (comonomers), like ethylene. Preferably the same solid catalyst system (SCS) is used as for the polymerization of the propylene homopolymer (H-PP) and/or the random propylene copolymer (R-PP).

With respect to the above-mentioned preferred slurry-gas phase process or the preferred slurry-gas-gas phase, the following general information can be provided with respect to the process conditions.

The conditions for the first reactor, i.e. the slurry reactor, like a loop reactor, may be as follows:

- the temperature is within the range of 40 °C to 110 °C, preferably between 60 °C and 100 °C, more preferably between 70 and 90 °C,
- the pressure is within the range of 20 bar to 80 bar, preferably between 30 bar to 60 bar,
- hydrogen can be added for controlling the molar mass in a manner known per se.

Subsequently, the reaction mixture from the first reactor is transferred to the second reactor, i.e. gas phase reactor, whereby the conditions are preferably as follows:

- the temperature is within the range of 50 °C to 130 °C, preferably between 70 °C and 100 °C,
- the pressure is within the range of 5 bar to 50 bar, preferably between 15 bar to 35 bar,
- hydrogen can be added for controlling the molar mass in a manner known per se.

The conditions in the third reactor and any subsequent reactor, preferably in the reactor(s) where the elastomeric propylene copolymer (E) is produced, i.e. in the second or third gas phase reactor, are similar to the second reactor, i.e. the first gas phase reactor.

The residence time can vary in the reactor zones identified above. In embodiments, the residence time in the slurry reaction, for example the loop reactor, is in the range of from 0.5 to 5 hours, for example 0.5 to 2 hours, while the residence time in the gas phase reactor(s) generally will be from 1 to 8 hours.

The properties of the polypropylene (PP) produced with the above-outlined process may be adjusted and controlled with the process conditions as known to the skilled person, for example by one or more of the following process parameters: temperature, hydrogen feed, comonomer feed, propylene feed, catalyst type and amount of external donor, split between two or more components of a multimodal polymer.

In addition to the actual polymerization reactors additional pre- and post-reactors can be used. Typically prepolymerisation reactors are used.

The above process enables very feasible means for obtaining the reactor-made polypropylene (PP).

The present invention is further described by way of examples.

## EXAMPLES

### A. Measuring methods

The following definitions of terms and determination methods apply for the above general description of the invention as well as to the below examples unless otherwise defined.

### Quantification of microstructure by NMR spectroscopy

Quantitative nuclear-magnetic resonance (NMR) spectroscopy was used to quantify the isotacticity, regio-regularity and comonomer content of the polymers.

Quantitative $^{13}C\{^1H\}$ NMR spectra recorded in the molten-state using a Bruker Advance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. Standard single-pulse excitation was employed utilising the NOE at short recycle delays (as described in Pollard, M., Klimke, K., Graf, R., Spiess, H.W., Wilhelm, M., Sperber, O., Piel, C., Kaminsky, W., Macromolecules 2004,37,813, and in Klimke, K., Parkinson, M., Piel,

C., Kaminsky, W., Spiess, H.W., Wilhelm, M., Macromol. Chem. Phys. 2006,207,382) and the RS-HEPT decoupling scheme (as described in Filip, X., Tripon, C., Filip, C., J. Mag. Resn. 2005,176,239, and in Griffin, J.M., Tripon, C., Samoson, A., Filip, C., and Brown, S.P., Mag. Res. in Chem. 2007,45,S1,S198). A total of 1024 (1k) transients were acquired per spectra.

Quantitative $^{13}C\{^1H\}$ NMR spectra were processed, integrated and relevant quantitative properties determined from the integrals. All chemical shifts are internally referenced to the methyl isotactic pentad (mmmm) at 21.85 ppm.

The tacticity distribution was quantified through integration of the methyl region in the $^{13}C\{^1H\}$ spectra, correcting for any signal not related to the primary (1,2) inserted propene stereo sequences, as described in Busico, V., Cipullo, R., Prog. Polym. Sci. 2001,26,443 and in Busico, V., Cipullo, R., Monaco, G., Vacatello, M., Segre, A.L., Macromolecules 1997,30,6251.

Characteristic signals corresponding to regio defects were observed (Resconi, L., Cavallo, L., Fait, A., Piemontesi, F., Chem. Rev. 2000,100,1253). The influence of regio defects on the quantification of the tacticity distribution was corrected for by subtraction of representative regio defect integrals from specific integrals of the stereo sequences.

The isotacticity was determined at the triad level and reported as the percentage of isotactic triad mm with respect to all triad sequences:

$$\% mm = (mm / (mm+mr+rr))*100$$

Characteristic signals corresponding to the incorporation of 1-hexene were observed, and the 1-hexene content was calculated as the mole percent of 1-hexene in the polymer, H(mol%), according to:

$$[H] = H_{tot} / (P_{tot}+H_{tot})$$

where:

$$H_{tot} = I(\alpha B_4)/2 + I(\alpha\alpha B_4)x2$$

where $I(\alpha B_4)$ is the integral of the $\alpha B_4$ sites at 44.1 ppm, which identifies the isolated 1-hexene incorporated in PPHPP sequences, and $I(\alpha\alpha B_4)$ is the integral of the $\alpha\alpha B_4$ sites at 41.6 ppm, which identifies the consecutively incorporated 1-hexene in PPHHPP sequences. $P_{tot}$ = Integral of all CH3 areas on the methyl region with correction applied for underestimation of other propene units not accounted for in this region and overestimation due to other sites found in this region. and

$$H(mol\%) = 100x[H]$$

which is then converted into wt% using the correlation

$$H(wt\%) = (100xHmol\%x84.16)/(Hmol\%x84.16+(100-Hmol\%)x42.08)$$

A statistical distribution is suggested from the relationship between the content of hexene present in isolated (PPHPP) and consecutive (PPHHPP) incorporated comonomer sequences:

$$[HH] < [H]^2$$

**Quantification of comonomer content by FTIR spectroscopy**

The comonomer content is determined by quantitative Fourier transform infrared spectroscopy (FTIR) after basic assignment calibrated via quantitative $^{13}C$ nuclear magnetic resonance (NMR) spectroscopy in a manner well known in the art. Thin films are pressed to a thickness of between 100-500 μm and spectra recorded in transmission mode. Specifically, the ethylene content of a polypropylene-co-ethylene copolymer is determined using the baseline corrected peak area of the quantitative bands found at 720-722 and 730-733 $cm^{-1}$. Quantitative results are obtained based upon reference to the film thickness.

The 1-hexene content in the polypropylene according to this invention is defined by NMR spectroscopy whereas the other comonomers, in particular ethylene, in the polypropylene is defined by FTIR-spectroscopy

**Calculation** of comonomer content of the polymer produced in the GPR 1:

$$\frac{C(P) - w(P1)x\,C(P1)}{w(P2)} = C(P2) \quad (I)$$

wherein

w(P1) is the weight fraction [in wt.-%] of the polymer produced in the loop reactor,
w(P2) is the weight fraction [in wt.-%] of the polymer produced in the GPR 1,
C(P1) is the comonomer content [in wt.-%] of the polymer produced in the loop reactor,
C(P) is the total comonomer content [in wt.-%] in the GPR 1,
C(P2) is the calculated comonomer content [in wt.-%] of the polymer produced in the GPR 1.

**Calculation** of comonomer content of the polymer produced in the GPR 2:

$$\frac{C(P) - w(P1)x\,C(P1)}{w(P2)} = C(P2) \quad (IV)$$

wherein

w(P1) is the weight fraction [in wt.-%] of the total polymer in the GPR 1,
w(P2) is the weight fraction [in wt.-%] of the polymer produced in the GPR 2,
C(P1) is the comonomer content [in wt.-%] of the total polymer in GPR 1,
C(P) is the total comonomer content [in wt.-%] in the GPR 2,
C(P2) is the calculated comonomer content [in wt.-%] of the polymer produced in the GPR 2.

**Number average molecular weight ($M_n$), weight average molecular weight ($M_w$) and molecular weight distribution (MWD)** are determined by Gel Permeation Chromatography (GPC) according to the following method:

The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methylphenol) as solvent at 145 °C and at a constant flow rate of 1 mL/min. 216.5 μL of sample solution were injected per analysis. The column set was calibrated using relative calibration with 19 narrow MWD polystyrene (PS) standards in the range of 0.5 kg/mol to 11 500 kg/mol and a set of well characterized broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument.

**Density**

Low density polyethylene (LDPE): The density was measured according to ISO 1183-2. The sample preparation was executed according to ISO 1872-2 Table 3 Q (compression moulding).

Low pressure polyethylene: Density of the polymer was measured according to ISO 1183 / 1872-2B.

**$MFR_2$ (230 °C)** is measured according to ISO 1133 (230 °C, 2.16 kg load).

**Calculation** of melt flow rate $MFR_2$ (230 °C) of the polymer produced in the GPR 1:

$$MFR(P2) = 10^{\left[\frac{\log(MFR(P)) - w(P1)\,x\,\log(MFR(P1))}{w(P2)}\right]} \quad (II)$$

wherein

w(P1) is the weight fraction [in wt.-%] of the polymer produced in the loop reactor,
w(P2) is the weight fraction [in wt.-%] of the polymer produced in the GPR 1,
MFR(P1) is the melt flow rate $MFR_2$ (230 °C) [in g/10min] of the polymer produced in the loop reactor,
MFR(P) is the total melt flow rate $MFR_2$ (230 °C) [in g/10min] in the GPR 1,
MFR(P2) is the calculated melt flow rate $MFR_2$ (230 °C) [in g/10min] of the polymer produced in the GPR 1.

**$MFR_2$ (190 °C)** is measured according to ISO 1133 (190 °C, 2.16 kg load).
**The xylene cold solubles (XCS, wt.-%):** Content of xylene cold solubles (XCS) is determined at 25 °C according ISO 16152; first edition; 2005-07-01; the remaining part is the xylene insoluble part (XIS)
**Calculation** of the xylene cold soluble (XCS) content of the polymer produced in the GPR 1:

$$\frac{XS(P) - w(P1)x\,XS(P1)}{w(P2)} = XS(P2) \quad (III)$$

wherein

w(P1) is the weight fraction [in wt.-%] of the polymer produced in the loop reactor,
w(P2) is the weight fraction [in wt.-%] of the polymer produced in the GPR 1,
XS(P1) is the xylene cold soluble (XCS) content [in wt.-%] of the polymer produced in the loop reactor,
XS(P) is the total xylene cold soluble (XCS) content [in wt.-%] in the GPR 1,
XS(P2) is the calculated xylene cold soluble (XCS) content [in wt.-%] of the polymer produced in the GPR 1.

**Calculation** of the xylene cold soluble (XCS) content of the polymer produced in the GPR 2:

$$\frac{XS(P) - w(P1)x\,XS(P1)}{w(P2)} = XS(P2) \quad (III)$$

wherein

w(P1) is the weight fraction [in wt.-%] of the total polymer in the GPR 1,
w(P2) is the weight fraction [in wt.-%] of the polymer produced in the GPR 2,
XS(P1) is the xylene cold soluble (XCS) content [in wt.-%] of the total polymer in GPR 1,
XS(P) is the total xylene cold soluble (XCS) content [in wt.-%] in the GPR 2,
XS(P2) is the calculated xylene cold soluble (XCS) content [in wt.-%] of the polymer produced in the GPR 2.

**Intrinsic viscosity** is measured according to DIN ISO 1628/1, October 1999 (in Decalin at 135 °C).
**Melting temperature ($T_m$) and heat of fusion ($H_f$), crystallization temperature ($T_c$) and heat of crystallization ($H_c$):** measured with Mettler TA820 differential scanning calorimetry (DSC) on 5 to 10 mg samples. DSC is run according to ISO 3146 / part 3 /method C2 in a heat / cool / heat cycle with a scan rate of 10 °C/min in the temperature range of +23 to +210°C. Crystallization temperature and **heat of crystallization** ($H_c$) are determined from the cooling step, while melting temperature and **heat of fusion** ($H_f$) are determined from the second heating step
**Porosity (Pore volume):** BET with $N_2$ gas, ASTM 4641, apparatus Micromeritics Tristar 3000; sample preparation: at a temperature of 50 °C, 6 hours in vacuum.
**Surface area:** BET with $N_2$ gas ASTM D 3663, apparatus Micromeritics Tristar 3000: sample preparation at a temperature of 50 °C, 6 hours in vacuum.
**ppm:** means parts per million by weight.

**Nanoparticle content in the catalyst:**

**ICP (Inductively coupled plasma emission) -spectrometry**

**ICP-instrument:** The instrument for determination of Al-, Si-, B- and Cl-content was ICP Optima 2000 DV, PSN 620785 (supplier PerkinElmer Instruments, Belgium) with the software of the instrument.
The catalyst was dissolved in an appropriate acidic solvent. The dilutions of the standards for the calibration curve are dissolved in the same solvent as the sample and the concentrations chosen so that the concentration of the sample would fall within the standard calibration curve.

The amounts are given in wt-.%.

**Ash calculated total:**

The ash and the below elements, Al and Si are calculated from a propylene polymer based on the productivity of the catalyst. (Similar calculations apply also e.g. for other atom residues)

These values would give the upper limit of the presence of said residues originating from the catalyst system, i.e. catalyst components including catalytically active species, donor(s) and cocatalyst. Catalyst productivity is calculated as yield divided by used catalyst amount in kgPP/gcatalyst.

Thus the estimate catalyst residues is based on catalyst system and polymerization productivity, catalyst residues in the polymer can be estimated according to:

$$\text{Al residues (ppm weight)} = (1/\text{producticity}) * [\text{Ti}]/M_{Ti} * \text{Al/Ti} * M_{Al} * 1000$$

$$\text{Si residues (ppm weight)} = (1/\text{productivity}) * [\text{Ti}]/M_{Ti} * \text{Al/Ti} / (\text{Al/Do}) * M_{Si} * 1000$$

$$\text{Nanoparticles (silica) (ppm weight)} = (1/\text{productivity}) * [\text{silica}_{cat}]/100 * 1000$$

$$\text{Catalyst residues (ppm weight)} = (1/\text{productivity}) * 1000$$

where:

- Productivity is in kgPP/gcatalyst
- [Ti] is the concentration of Ti in the catalyst in wt%
- $M_{Ti}$ is the molar mass of Ti 47.9 g/mol
- Al/Ti is the molar ratio of Al and Ti in polymerization
- $M_{Al}$ is the molar mass of Al 27.0 g/mol
- Al/Do is the molar ratio of TEAL and external donor in polymerization
- $M_{Si}$ is the molar mass of Si 28.1 g/mol
- [$\text{silica}_{cat}$] is the concentration of silica in the catalyst in wt.-%
- Catalyst residues includes components that comes with the catalyst itself: Mg, Cl, Ti

**Mean particle size (d50)** was measured with Coulter Counter LS200 at room temperature with n-heptane as medium, particle sizes below 100 nm by transmission electron microscopy.

**Particle size (d10)** is given in nm and measured with Coulter Counter LS200 at room temperature with n-heptane as medium.

**Particle size (d90)** is is given in nm and measured with Coulter Counter LS200 at room temperature with n-heptane as medium.

**SPAN** is defined as follows:

$$\frac{d90\,[\mu m] - d10\,[\mu m]}{d50\,[\mu m]}$$

**DC Conductivity method**

Electrical conductivity measured at 70 °C and 30 kV/mm mean electric field from a non-degassed or degassed, 1 mm plaque sample consisting of a polymer composition.

Plaque Sample preparation:

The plaques are compression moulded from pellets of the test polymer composition. The final plaques have a thickness of 1 mm and 200 × 200 mm.

The plaques are press-moulded at 130°C for 12 min while the pressure is gradually increased from 2 to 20

MPa. Thereafter the temperature is increased and reaches 180°C after 5 min.

The temperature is then kept constant at 180°C for 15 min. Finally the temperature is decreased using the cooling rate 15 °C/min until room temperature is reached when the pressure is released. The plaques are immediately after the pressure release controlled for thickness variations and thereafter mounted in the test cell for conductivity measurement, in order to prevent loss of volatile substances (used for the non-degassed determination).

If the plaque is to be degassed it is placed in a ventilated oven at atmospheric pressure for 24 h at 70°C. Thereafter the plaque is again wrapped in metallic foil in order to prevent further exchange of volatile substances between the plaque and the surrounding.

Measurement procedure:

A high voltage source is connected to the upper electrode, to apply voltage over the test sample. The resulting current through the sample is measured with an electrometer or Pico-ammeter. The measurement cell is a three electrodes system with brass electrodes. The brass electrodes are placed in an oven to facilitate measurements at elevated temperature and provide uniform temperature of the test sample. The diameter of the measurement electrode is 100 mm. Silicone rubber skirts are placed between the brass electrode edges and the test sample, to avoid flashovers from the round edges of the electrodes.

The applied voltage was 30 kV DC meaning a mean electric field of 30 kV/mm. The temperature was 70°C. The current through the plaque was logged throughout the whole experiments lasting for 24 hours. The current after 24 hours was used to calculate the conductivity of the insulation. A schematic picture of the measurement setup is shown in Figure 2. Explanation of the numbered parts "1-6": "1" Connection to high voltage; "2" Measuring electrode; "3" Electrometer/Pico Ammeter; "4" Brass electrode; "5" Test sample; "6" Si-rubber.

**B. Examples**

**Polymerisation examples**

All raw materials were essentially free from water and air and all material additions to the reactor and the different steps were done under inert conditions in nitrogen atmosphere. The water content in propylene was less than 5 ppm. The polymer powder of each example was pelletized in an extruder before testing.

**Inventive example IE1:**

Bulk polymerisation: The polymerisation was done in a 5 litre reactor, which was heated, vacuumed and purged with nitrogen before taken into use. 226 μl TEAL (tri ethyl Aluminium, from Chemtura used as received), 38 μl donor D (dicyclo pentyl dimethoxy silane, from Wacker, dried with molecular sieves) and 30 ml pentane (dried with molecular sieves and purged with nitrogen) were mixed and allowed to react for 5 minutes. Half of the mixture was added to the reactor and the other half was mixed with 10.6 mg Sirius catalyst.

The Sirius catalyst was prepared according to example 8 of WO 2004/02911, except that diethylaluminium chloride was used as an aluminium compound instead of triethyl aluminium. Ti content 3.0 wt.%. After about 10 minutes the catalyst/TEAL/donor D/pentane mixture was added to the reactor. The Al/Ti molar ratio was 250 and the Al/Do molar ratio was 10. 370 mmol hydrogen and 1400 g propylene were added to the reactor. Ethylene was added continuously during polymerisation and totally 14.4 g was added. The temperature was increased from room temperature to 70 °C during 18 minutes. The reaction was stopped, after 30 minutes at 70 °C, by flashing out unreacted monomer. Finally the polymer powder was taken out from the reactor and analysed. The other polymer details are seen in tables 1 to 3.

GPR 1: After having flashed out unreacted propylene after the bulk polymerisation step the polymerisation was continued in gas phase. After the bulk phase the reactor was pressurised up to 5 bar and purged three times with a 0.053 mol/mol ethylene/propylene mixture. 190 mmol hydrogen was added and temperature was increased to 80 °C and pressure with the aforementioned ethylene/propylene mixture up to 20 bar during 13 minutes. Consumption of propylene was followed from a scale and consumption of ethylene was followed via a flow controller. The reaction was allowed to continue until a 49/51 split, by weight, between polymer amount produced in the bulk stage and polymer amount produced in the gas phase was reached. Other details are shown in tables 1 to 3.

GPR 2: After having flashed out unreacted monomer after the first gas phase polymerisation the polymerisation was continued in the second gas phase (rubber stage). The hydrogen amount in the rubber stage was 420 mmol and ethylene/propylene molar ratio in the feed to the reactor was 0.53. The temperature was 80 °C. The reaction was allowed to continue until 22 wt.-% of the total polymer had been produced in the rubber stage, based on consumption of ethylene and propylene. The other details are shown in tables 1 to 3.

**Inventive example IE2:**

Bulk polymerisation: Was done as the bulk polymerisation of IE1 using the catalyst catalyst as in IE1, with the exception that the catalyst had Ti content 3.1 wt%. The hydrogen amount was 420 mmol. The other details are shown in tables 1 to 3.

GPR1: Was done as the GPR1 of IE1. The other details are shown in tables 1 to 3.

GPR2: Was done as the GPR2 of IE1. The other details are shown in tables 1 to 3.

**Inventive example IE3:**

Bulk polymerisation: Was done as the bulk polymerisation of IE1, with the exception that the catalyst contained a small amount of nano sized silica particles. This catalyst was prepared on bench scale according to patent WO2009/068576 A1 example 4 and had Ti content 3.9 wt.-% and contained 8.9 wt.-% nanoparticles. The mean particle size of the silica particles were 80 nm and were manufactured by Nanostructure&Amorphus Inc (nanoAmor).

The hydrogen amount in the bulk step was 400 mmol. Other details are shown in tables 1 to 3.

GPR1: Was done as the GPR1 of IE1. The hydrogen amount in GPR1 was 250 mmol. The other details are shown in tables 1 to 3.

GPR2: Was done as the GPR2 of IE1. The hydrogen amount in the GPR2 was 500 mmol. The other details are shown in tables 1 to 3.

**Inventive example IE4:**

A stirred tank reactor having a volume of 50 $dm^3$ was operated as liquid-filled at a temperature of 35 °C and a set pressure of 55 bar. Into the reactor was fed propylene so much that the average residence time in the reactor was 0.33 hours together with 0.97 g/h hydrogen and 2.12 g/h of the metallocene catalyst system (SSC system), i.e. rac-ethyl(cyclohexyl)silanediylbis(2-methyl-4(4-tertbutylphenyl)indenyl)$ZrCl_2$, was produced as described in example 10 of WO 2010/052263.

The slurry from this prepolymerization reactor was directed to a loop reactor having a volume of 150 $dm^3$ together with 145 kg/h of propylene and 5.7 kg/h of hexene. The loop reactor was operated at a temperature of 65 °C and a pressure of 52 bar. Residence time was 0.38 h.

The polymer slurry from the loop reactor was directly conducted into a gas phase reactor operated at a temperature 85 °C and a pressure 3000 kPa. Into the reactor were fed additional propylene (65 kg/h), hexene (0 kg/h) and hydrogen/propylene ratio was 0.25 mol/kmol. The total productivity was 17.7 kg/g. The other details are shown in tables 1 to 3.

**Comparative Example CE2:**

Bulk polymerisation: Was done as the bulk polymerisation of IE1, with the exception that the catalyst was a conventional $4^{th}$ generation ZN PP catalyst, which was a transesterified $MgCl_2$-supported ZN PP prepared as follows: First, 0.1 mol of $MgCl_2$x 3 EtOH was suspended under inert conditions in 250 ml of decane in a reactor at atmospheric pressure.

The solution was cooled to the temperature of -15°C and 300 ml of cold $TiCl_4$ was added while maintaining the temperature at said level. Then, the temperature of the slurry was increased slowly to 20 °C. At this temperature, 0.02 mol of dioctylphthalate (DOP) was added to the slurry. After the addition of the phthalate, the temperature was raised to 135 °C during 90 minutes and the slurry was allowed to stand for 60 minutes. Then, another 300 ml of $TiCl_4$ was added and the temperature was kept at 135 °C for 120 minutes. After this, the catalyst was filtered from the liquid and washed six times with 300 ml heptane at 80 °C.

Then, the solid catalyst component was filtered and dried. (Catalyst and its preparation concept is described in general e.g. in patent publications EP 4 915 66, EP 5 912 24 and EP 5 863 90) Ti content was 1.8 wt.-% Ti and that the Al/Ti molar ratio was 500 and Al/Do molar ratio 20. The hydrogen amount was 550 mmol. The other details are shown in table 1-3.

GPR1: Was done as the GPR1 of IE1. The hydrogen amount in GPR1 was 300 mmol and the ethylene/propylene ratio in the feed to the reactor was 0,058 mol/mol. The other details are shown in table 1-3.

GPR2: Was done as the GPR2 of IE1. The hydrogen amount in the rubber stage was 500 mmol. The other details are shown in table 1-3.

**Comparative Example CE1:** is commercially available very high purity "Borclean HB311BF" propylene homopolymer grade of Borealis AG for dielectric applications, which has $MFR_2$ (230°C) of 2.2 g/10 min, $T_m$ (DSC, ISO 3146) of 161 to 165°C, very low ash content 10 to 20 ppm (measured by ISO 3451-1) and has been produced by a $TiCl_3$

based Ziegler-Natta catalyst. The commercial product has been further purified after the polymerization to reduce the catalyst residues.

**Table 1:** Preparation of polymer

| | | IE 1 | IE 2 | IE 3 | CE 2 |
|---|---|---|---|---|---|
| **Bulk** | | | | | |
| Catalyst | [mg] | 10.6 | 9.9 | 15.0 | 8.0 |
| Ethylene fed | [g] | 14.4 | 14.3 | 14.3 | 15.8 |
| Yield | [g] | 280 | 259 | - | 365 |
| **GPR1** | | | | | |
| Propylene totally fed | [g] | 439 | 420 | 440 | 476 |
| Ethylene totally fed | [g] | 15.9 | 15.4 | 16.0 | 19.1 |
| Total time | [min] | 57 | 75 | 51 | 60 |
| Yield | [g] | 567 | 552 | 667 | 695 |
| Split. Bulk/GPR1 | [weight ratio] | 49/51 | 47/53 | 50/50 | 47/53 |
| Ethylene in polymer | [wt.-%] | 4.0 | 4.2 | 3.4 | 3.7 |
| **GPR2** | | | | | |
| Total time | [min] | 30 | 31 | 35 | 38 |
| Yield | [g] | 726 | 687 | 849 | 871 |
| Produced in GPR2 | [wt.-%] | 22 | 20 | 21 | 20 |
| Ethylene in XCS | [wt.-%] | 25 | 21 | 24 | 24 |
| Ethylene in polymer | [wt.-%] | 9.9 | 10.2 | 9.4 | 9.9 |
| Productivity | [kgPP/gcat] | 68 | 69 | 57 | 123 |
| Al in polymer calculated | [ppmw] | 62 | 63 | 97 | 41 |
| Si in polymer calculated | [ppmw] | 6 | 7 | 10 | 2 |
| Catalyst residues calculated | [ppmw] | 15 | 14 | 18 | 8 |
| Nanoparticles calculated | [ppmw] | - | - | 2 | - |
| Ash calculated total | [ppmw] | 83 | 84 | 127 | 52 |

**Table 2:** Polymer properties after each polymerization stage

| | | CE 2 | IE 1 | IE 2 | IE 3 | IE 4 |
|---|---|---|---|---|---|---|
| | | RAHECO | RAHECO | RAHECO | RAHECO | R-PP |
| **Bulk** | | | | | | |
| $MFR_2$ | [g/10 min] | 14.0 | 9.1 | 11.0 | n.m | 10.3 |
| C6 | [wt.-%] | - | - | - | - | 2.2 |
| C2 | [wt.-%] | 2.2 | 2.6 | 2.7 | n.m | - |
| XCS | [wt.-%] | n.m | 4.7 | 5.0 | n.m | 1.1 |
| Tm | [°C] | 150 | 146 | 145 | n.m | n.m |
| **GPR 1** | | | | | | |
| $MFR_2$ | [g/10 min] | 19 | 7.8 | 6.1 | 11.0 | 8.1 |
| $MFR_2$* | [g/10 min] | 25.0 | 6.7 | 3.7 | n.m | 5.5 |

(continued)

| GPR 1 | | | | | | |
|---|---|---|---|---|---|---|
| C6 | [wt.-%] | - | - | - | - | 3.9 |
| C6* | [wt.-%] | - | - | - | - | 6.9 |
| C2 | [wt.-%] | 3.7 | 4.0 | 4.2 | 3.4 | - |
| C2* | [wt.-%] | 4.8 | 5.3 | 4.2 | n.m | - |
| XCS | [wt.-%] | n.m | 7.5 | 9.3 | n.m | 1.3 |
| XCS* | [wt.-%] | n.m | 10.2 | 13.1 | n.m | 1.5 |
| Tm | [°C] | 144 | 140 | 140 | 141 | 134 |
| **GPR 2** | | | | | | |
| C6 | [wt.-%] | - | - | - | - | - |
| C2 | [wt.-%] | 9.9 | 9.9 | 10.2 | 9.4 | - |
| XCS | [wt.-%] | 26 | 26 | 27 | 25 | - |
| Tm | [°C] | 144 | 138 | 139 | 141 | - |

* calculated values for polymer produced in the respective reactor
RAHECO heterophasic propylene copolymer containing a random ethylene-propylene copolymer as matrix and an ethlene-propylene rubber
R-PP random hexene-propylene copolymer
n.m not measured

**Table 3:** Properties of the final polymers

| | | CE 1 | CE 2 | IE 1 | IE 2 | IE 3 | IE 4 |
|---|---|---|---|---|---|---|---|
| $MFR_2$ | [g/10min] | 2.2 | 21 | 6.6 | 6.1 | 7.3 | 8.1 |
| Tm | [°C] | 161-165 | 144 | 138 | 139 | 141 | 134 |
| Tc | [°C] | n.m | 103 | 99 | 101 | 101 | 98 |
| C6 | [wt.-%] | - | - | - | - | - | 3.9 |
| C2 | [wt.-%] | - | 9.9 | 9.9 | 10.2 | 9.4 | - |
| XCS | [wt.-%] | n.m | 26 | 26 | 27 | 25 | 1.3 |
| Mw of XCS | [kg/mol] | - | 96 | 168 | 186 | 142 | - |
| ash | [ppm] | 10-20* | 52 | 83 | 84 | 127 | n.m |
| EC | [fS/m] | 2.8 | 4.7 | 1.9 | 2.1 | 1.9 | 0.2 |

EC electrical conductivity
ash ash calculated from catalyst residues + cocatalyst/kg polymer
* according to ISO 3451-1
n.m not measured

**Table 1:** Preparation of polymer

| | | IE 1 | IE 2 | IE 3 | CE 2 |
|---|---|---|---|---|---|
| **Bulk** | | | | | |
| Catalyst | [mg] | 10.6 | 9.9 | 15.0 | 8.0 |
| Ethylene fed | [g] | 14.4 | 14.3 | 14.3 | 15.8 |

(continued)

| | | IE 1 | IE 2 | IE 3 | CE 2 |
|---|---|---|---|---|---|
| **Bulk** | | | | | |
| Yield | [g] | 280 | 259 | - | 365 |
| **GPR1** | | | | | |
| Propylene totally fed | [g] | 439 | 420 | 440 | 476 |
| Ethylene totally fed | [g] | 15.9 | 15.4 | 16.0 | 19.1 |
| Total time | [min] | 57 | 75 | 51 | 60 |
| Yield | [g] | 567 | 552 | 667 | 695 |
| Split. Bulk/GPR1 | [weight ratio] | 49/51 | 47/53 | 50/50 | 47/53 |
| Ethylene in polymer | [wt.-%] | 4.0 | 4.2 | 3.4 | 3.7 |
| **GPR2** | | | | | |
| Total time | [min] | 30 | 31 | 35 | 38 |
| Yield | [g] | 726 | 687 | 849 | 871 |
| Produced in GPR2 | [wt.-%] | 22 | 20 | 21 | 20 |
| Ethylene in XCS | [wt-%] | 25 | 21 | 24 | 24 |
| Ethylene in polymer | [wt-%] | 9.9 | 10.2 | 9.4 | 9.9 |
| Productivity | [kgPP/gcat] | 68 | 69 | 57 | 123 |
| Al in polymer calculated | [ppmw] | 62 | 63 | 97 | 41 |
| Si in polymer calculated | [ppmw] | 6 | 7 | 10 | 2 |
| Catalyst residues calculated | [ppmw] | 15 | 14 | 18 | 8 |
| Nanoparticles calculated | [ppmw] | - | - | 2 | - |
| Ash calculated total | [ppmw] | 83 | 84 | 127 | 52 |

**Table 2:** Polymer properties after each polymerization stage

| | | CE 2 | IE 1 | IE 2 | IE 3 | IE 4 |
|---|---|---|---|---|---|---|
| | | RAHECO | RAHECO | RAHECO | RAHECO | R-PP |
| **Bulk** | | | | | | |
| $MFR_2$ | [g/10 min] | 14.0 | 9.1 | 11.0 | n.m | 10.3 |
| C6 | [wt.-%] | - | - | - | - | 2.2 |
| C2 | [wt.-%] | 2.2 | 2.6 | 2.7 | n.m | - |
| XCS | [wt.-%] | n.m | 4.7 | 5.0 | n.m | 1.1 |
| Tm | [°C] | 150 | 146 | 145 | n.m | n.m |
| **GPR1** | | | | | | |
| $MFR_2$ | [g/10 min] | 19 | 7.8 | 6.1 | 11.0 | 8.1 |
| $MFR_2$* | [g/10 min] | 25.0 | 6.7 | 3.7 | n.m | 5.5 |
| C6 | [wt.-%] | - | - | - | - | 3.9 |
| C6* | [wt.-%] | - | - | - | - | 6.9 |
| C2 | [wt.-%] | 3.7 | 4.0 | 4.2 | 3.4 | - |

(continued)

| | | | | | | |
|---|---|---|---|---|---|---|
| **GPR1** | | | | | | |
| C2* | [wt.-%] | 4.8 | 5.3 | 4.2 | n.m | - |
| XCS | [wt.-%] | n.m | 7.5 | 9.3 | n.m | 1.3 |
| XCS* | [wt.-%] | n.m | 10.2 | 13.1 | n.m | 1.5 |
| Tm | [°C] | 144 | 140 | 140 | 141 | 134 |
| **GPR 2** | | | | | | |
| C6 | [wt.-%] | - | - | - | - | - |
| C2 | [wt.-%] | 9.9 | 9.9 | 10.2 | 9.4 | - |
| XCS | [wt.-%] | 26 | 26 | 27 | 25 | - |
| Tm | [°C] | 144 | 138 | 139 | 141 | - |

* calculated values for polymer produced in the respective reactor
RAHECO heterophasic propylene copolymer containing a random ethylene-propylene copolymer as matrix and an ethlene-propylene rubber
R-PP random hexene-propylene copolymer
n.m not measured

**Table 3:** Properties of the final polymers

| | | CE 1 | CE 2 | IE 1 | IE 2 | IE 3 | IE 4 |
|---|---|---|---|---|---|---|---|
| $MFR_2$ | [g/10min] | 2.2 | 21 | 6.6 | 6.1 | 7.3 | 8.1 |
| Tm | [°C] | 161-165 | 144 | 138 | 139 | 141 | 134 |
| Tc | [°C] | n.m | 103 | 99 | 101 | 101 | 98 |
| C6 | [wt.-%] | - | - | - | - | - | 3.9 |
| C2 | [wt-%] | - | 9.9 | 9.9 | 10.2 | 9.4 | - |
| XCS | [wt-%] | n.m | 26 | 26 | 27 | 25 | 1.3 |
| Mw of XCS | [kg/mol] | - | 96 | 168 | 186 | 142 | - |
| ash | [ppm] | 10-20* | 52 | 83 | 84 | 127 | n.m |
| EC | [fS/m] | 2.8 | 4.7 | 1.9 | 2.1 | 1.9 | 0.2 |

EC electrical conductivity
ash ash calculated from catalyst residues + cocatalyst/kg polymer
* according to ISO 3451-1
n.m not measured

## Claims

**1.** High voltage direct current (HVDC) power cable or extra high voltage direct current (EHVDC) power cable comprising a conductor surrounded by at least one layer (L) comprising a polypropylene (PP), wherein the polypropylene (PP) comprises nanosized catalyst fragments (F) which originate from a solid catalyst system (SCS), wherein the nanosized catalyst fragments (F) have a mean particle size d50 of below 1 μm, measured with a coulter counter LS200 at room temperature with n-heptane as medium.

**2.** Power cable according to claim 1, wherein said catalyst fragments (F) originate from a solid catalyst system (SCS),

(a) said solid catalyst system (SCS) has

(a1) a pore volume measured according ASTM 4641 of less than 1.40 ml/g,
and/or
(a2) a surface area measured according to ASTM D 3663 of lower than $30m^2/g$,
and/or
(a3) a mean particle size d50 in the range of 1 to 200 μm,

and/or
(b) said solid catalyst system (SCS) is obtained by

(b1) providing a solution (S) comprising an organometallic compound of a transition metal of one of the groups 3 to 10 of the periodic table (IUPAC),
(b2) forming a liquid/liquid emulsion system (E), which comprises said solution (S) as droplets dispersed in the continuous phase of the emulsion system (E),
(b3) solidifying said dispersed phase (droplets) to form the solid catalyst system (SCS).

**3.** Power cable according to claim 2, wherein said solid catalyst system (SCS) comprises inclusions (IC), said inclusions (IC) are catalytically inactive solid material having

(a) a specific surface area below 500 $m^2/g$,
and/or
(b) a mean particle size below 200 nm.

**4.** Power cable according to one of the preceding claims, wherein the active catalyst species of the solid catalyst system (SCS) is a Ziegler-Natta catalyst or a single-site catalyst, preferably a single-site catalyst.

**5.** Power cable according to one of the preceding claims, wherein the polypropylene (PP) is not crosslinked.

**6.** Power cable according to one of the preceding claims, wherein the polypropylene (PP) is

(a) a propylene homopolymer (H-PP),
or
(b) a random propylene copolymer (R-PP),
or
(c) a heterophasic propylene copolymer (HECO) comprising

(c1) a polymer matrix (M) being said propylene homopolymer (H-PP) and/or said random propylene copolymer (R-PP),
and
(c2) an elastomeric propylene copolymer (E).

**7.** Power cable according to one of the preceding claims, wherein the polypropylene (PP) is a random propylene copolymer (R-PP) and said random propylene copolymer (R-PP) is produced in the presence of a solid catalyst system (SCS), wherein further the active catalyst species of said solid catalyst system (SCS) is a Ziegler-Natta catalyst or a single-site catalyst, preferably a single-site catalyst.

**8.** Power cable according to one of the preceding claims 1 to 6, wherein the polypropylene (PP) is a heterophasic propylene copolymer (HECO) and said heterophasic propylene copolymer (HECO) is produced in the presence of a solid catalyst system (SCS), wherein further the active catalyst species of said solid catalyst system (SCS) is a Ziegler-Natta catalyst or a single-site catalyst, preferably a single-site catalyst.

**9.** Power cable according to one of the preceding claims, wherein the power cable comprises a conductor surrounded by an inner semiconductive layer, an insulating layer and an outer semiconductive layer, in that order, wherein at least the insulation layer is layer (L).

**10.** A process for producing a power cable according to one of the preceding claims, wherein the process comprises the steps of

(a) producing the polypropylene (PP) in the presence of the solid catalyst system (SCS), and

(b) applying on the conductor, preferably by (co)extrusion, at least one layer (L) which comprises, preferably consists of, the polypropylene (PP),

wherein the polypropylene (PP) and the solid catalyst system (SCS) are defined according to one of the preceding claims.

**Patentansprüche**

1. Hochspannungs-Gleichstrom (HVDC)-Stromkabel oder Extra-Hochspannungs-Gleichstrom (EHVDC)-Stromkabel, umfassend einen Leiter, umgeben von mindestens einer Schicht (L), die ein Polypropylen (PP) umfasst, wobei das Polypropylen (PP) Katalysator-Fragmente (F) in Nano-Größe umfasst, die von einem festen Katalysatorsystem (SCS) stammen, wobei die Katalysator-Fragmente (F) in Nano-Größe eine mittlere Teilchen-Größe d50 von unter 1 μm, gemessen mit einem Coulter-Counter LS200 bei RaumTemperatur mit n-Heptan als Medium, aufweisen.

2. Stromkabel nach Anspruch 1, wobei die Katalysator-Fragmente (F) aus einem festen Katalysatorsystem (SCS) stammen,

   (a) das feste Katalysatorsystem (SCS) aufweist

      (a1) ein Poren-Volumen, gemessen gemäß ASTM 4641, von weniger als 1,40 ml/g.
      und/oder
      (a2) eine Oberfläche, gemessen gemäß ASTM D 3663, von geringer als 30 $m^2$/g,
      und/oder
      (a3) eine mittlere Teilchen-Größe d50 im Bereich
      von 1 bis 200 μm,

   und/oder
   (b) das feste Katalysatorsystem (SCS) erhalten wird durch

      (b1) Bereitstellen einer Lösung (S), umfassend eine organometallische Verbindung von einem Übergangs-Metall von einer der Gruppen 3 bis 10 des Perioden-Systems (IUPAC),
      (b2) Bilden eines flüssig/flüssig-Emulsions-Systems (E), das die Lösung (S) als Tröpfchen, dispergiert in der kontinuierlichen Phase des Emulsions-Systems (E), umfasst,
      (b3) Verfestigen der dispergierten Phase (Tröpfchen) zur Bildung des festen Katalysatorsystems (SCS).

3. Stromkabel nach Anspruch 2, wobei das feste Katalysatorsystem (SCS) Einschlüsse (IC) umfasst, wobei die Einschlüsse (IC) katalytisch inaktives festes Material sind mit

   (a) einer spezifischen Oberfläche unter 500 $m^2$/g, und/oder
   (b) einer mittleren Teilchen-Größe unter 200 nm.

4. Stromkabel nach einem der vorangehenden Ansprüche, wobei die aktive Katalysator-Spezies des festen Katalysatorsystems (SCS) ein Ziegler-Natta-Katalysator oder ein Single-Site-Katalysator, vorzugsweise ein Single-Site-Katalysator, ist.

5. Stromkabel nach einem der vorangehenden Ansprüche, wobei das Polypropylen (PP) nicht vernetzt ist.

6. Stromkabel nach einem der vorangehenden Ansprüche, wobei das Polypropylen (PP) ist

   (a) ein Propylen-Homopolymer (H-PP)
   oder
   (b) ein statistisches Propylen-Copolymer (R-PP)
   oder
   (c) ein heterophasisches Propylen-Copolymer (HECO), umfassend

      (c1) eine Polymer-Matrix (M), die das Propylen-Homopolymer (H-PP) und/oder das statistische Propylen-Copolymer (R-PP) ist,

und
(c2) ein elastomeres Propylen-Copolymer (E).

**7.** Stromkabel nach einem der vorangehenden Ansprüche, wobei das Polypropylen (PP) ein statistisches Propylen-Copolymer (R-PP) ist und das statistische Propylen-Copolymer (R-PP) in Gegenwart von einem festen Katalysatorsystem (SCS) hergestellt wird, wobei die aktive Katalysator-Spezies des festen Katalysatorsystems (SCS) weiterhin ein Ziegler-Natta-Katalysator oder ein Single-Site-Katalysator, vorzugsweise ein Single-Site-Katalysator, ist.

**8.** Stromkabel nach einem der vorangehenden Ansprüche 1 bis 6, wobei das Polypropylen (PP) ein heterophasisches Propylen-Copolymer (HECO) ist und das heterophasische Propylen-Copolymer (HECO) in Gegenwart von einem festen Katalysatorsystem (SCS) hergestellt wird, wobei die aktive Katalysator-Spezies des festen Katalysatorsystems (SCS) weiterhin ein Ziegler-Natta-Katalysator oder ein Single-Site-Katalysator, vorzugsweise ein Single-Site-Katalysator, ist.

**9.** Stromkabel nach einem der vorangehenden Ansprüche, wobei das Stromkabel einen Leiter umfasst, umgeben von einer inneren Halbleiter-Schicht, einer isolierenden Schicht und einer äußeren Halbleiter-Schicht, in dieser Reihenfolge, wobei die Isolationsschicht mindestens Schicht (L) ist.

**10.** Verfahren zur Herstellung eines Stromkabels nach einem der vorangehenden Ansprüche, wobei das Verfahren die Schritte umfasst von

(a) Herstellen des Polypropylens (PP) in Gegenwart des festen Katalysatorsystems (SCS), und
(b) Auftragen auf den Leiter, vorzugsweise durch (Co)extrusion, mindestens einer Schicht (L), die das Polypropylen (PP) umfasst, vorzugsweise daraus besteht,

wobei das Polypropylen (PP) und das feste Katalysatorsystem (SCS) nach einem der vorangehenden Ansprüche definiert sind.

## Revendications

**1.** Câble électrique pour courant continu haute tension (HVDC) ou câble électrique pour courant continu extra-haute tension (EHVDC) comprenant un conducteur entouré par au moins une couche (L) comprenant un polypropylène (PP), dans lequel le polypropylène (PP) comprend des fragments de catalyseur de taille nanométrique (F) qui sont issus d'un système catalyseur solide (SCS), et dans lequel les fragments de catalyseur de taille nanométrique (F) présentent une granulométrie moyenne d50 inférieure à 1 $\mu$m, mesurée avec un compteur Coulter LS200 à la température ambiante avec du n-heptane en tant que milieu.

**2.** Câble électrique selon la revendication 1, dans lequel lesdits fragments de catalyseur (F) sont issus d'un système catalyseur solide (SCS),

(a) ledit système catalyseur solide (SCS) présente

(a1) un volume de pores, mesuré conformément à la norme ASTM 4641, inférieur à 1,40 ml/g,
et/ou
(a2) une surface active, mesurée conformément à la norme ASTM D 3663, inférieure à 30 $m^2$/g,
et/ou
(a3) une granulométrie moyenne d50 située dans la plage allant de 1 à 200 $\mu$m,

et/ou
(b) ledit système catalyseur (SCS) est obtenu par

(b1) obtention d'une solution (S) comprenant un composé organométallique d'un métal de transition parmi l'un des Groupes 3 à 10 du Tableau Périodique (IUPAC),
(b2) formation d'un système en émulsion liquide/ liquide (E), qui comprend ladite solution (S) sous la forme de gouttelettes dispersées dans la phase continue du système en émulsion (E),
(b3) solidification de ladite phase dispersée (gouttelettes) pour que soit formé le système catalyseur solide (SCS).

3. Câble électrique selon la revendication 2, dans lequel ledit système catalyseur solide (SCS) comprend des inclusions (IC), et lesdites inclusions (IC) sont en un matériau solide catalytiquement inactif présentant

(a) une surface spécifique inférieure à 500 $m^2/g$,
et/ou
(b) une granulométrie moyenne inférieure à 200 nm.

4. Câble électrique selon l'une quelconque des revendications précédentes, dans lequel l'espèce catalytique active du système catalyseur solide (SCS) est un catalyseur de Ziegler-Natta ou un catalyseur à un seul site, de préférence un catalyseur à un seul site.

5. Câble électrique selon l'une quelconque des revendications précédentes, dans lequel le polypropylène (PP) n'est pas réticulé.

6. Câble électrique selon l'une quelconque des revendications précédentes, dans lequel le polypropylène (PP) est

(a) un homopolymère de propylène (H-PP),
ou
(b) un copolymère statistique de propylène (R-PP),
ou
(c) un copolymère de propylène hétérophasique (HECO) comprenant

(c1) une matrice polymère (M) qui est ledit homopolymère de propylène (H-PP) et/ou ledit copolymère statistique de propylène (R-PP),
et
(c2) un copolymère de propylène élastomère (E).

7. Câble électrique selon l'une quelconque des revendications précédentes, dans lequel le polypropylène (PP) est un copolymère statistique de propylène (R-PP) et ledit copolymère statistique de propylène (R-PP) est produit en présence d'un système catalyseur solide (SCS), et dans lequel en outre l'espèce catalytique active dudit système catalyseur solide (SCS) est un catalyseur de Ziegler-Natta ou un catalyseur à un seul site, de préférence un catalyseur à un seul site.

8. Câble électrique selon l'une quelconque des revendications 1 à 6, dans lequel le polypropylène (PP) est un copolymère de propylène hétérophasique (HECO) et ledit copolymère de propylène hétérophasique (HECO) est produit en présence d'un système catalyseur solide (SCS), et dans lequel en outre l'espèce catalytique active dudit système catalyseur solide (SCS) est un catalyseur de Ziegler-Natta ou un catalyseur à un seul site, de préférence un catalyseur à un seul site.

9. Câble électrique selon l'une quelconque des revendications précédentes, lequel câble électrique comprend un conducteur entouré par une couche semi-conductrice intérieure, une couche isolante et une couche semi-conductrice extérieure, dans cet ordre, et dans lequel au moins la couche d'isolation est une couche (L).

10. Procédé pour produire un câble électrique selon l'une des revendications précédentes, lequel procédé comprend les étapes suivantes :

(a) production du polypropylène (PP) en présence du système catalyseur solide (SCS), et
(b) application sur le conducteur, de préférence par (co)extrusion, d'au moins une couche (L) qui comprend, de préférence consiste en, le polypropylène (PP),

dans lequel le polypropylène (PP) et le système catalyseur solide (SCS) sont définis selon l'une des revendications précédentes.

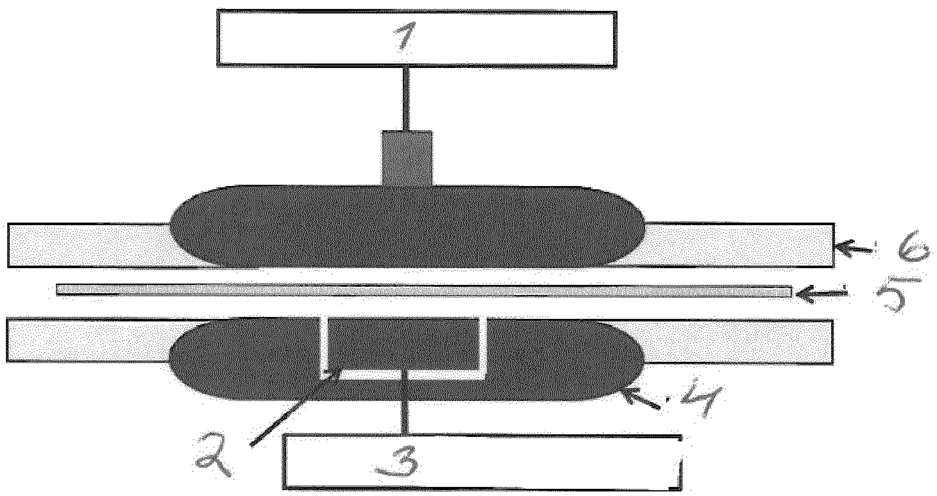


Figure 1: Schematic picture of the measurement setup for the electrical conductivity

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1881507 A1
- EP 1903579 A1
- EP 0810235 A
- EP 0688794 A
- WO 2007077027 A
- EP 2065405 A
- WO 03000754 A
- WO 03000757 A
- WO 03051934 A
- EP 0887379 A1
- WO 9212182 A
- WO 2004000899 A
- WO 2004111095 A
- WO 9924478 A
- WO 9924479 A
- WO 0068315 A
- WO 200402911 A
- WO 2009068576 A1
- WO 2010052263 A
- EP 491566 A
- EP 591224 A
- EP 586390 A


### Non-patent literature cited in the description


- Encyclopedia of Polymer Science and Engineering. 1986, vol. 6, 383-410
- Polyethylene: High-pressure. Encyclopedia of Materials: Science and Technology. Elsevier Science Ltd, 2001, 7181-7184
- **RESCONI et al.** *Chemical Reviews,* 2000, vol. 100 (4), 1263
- **A. ENDERS ; G. MAAS.** *Chemie in unserer Zeit,* 2000
- **PIERANDREA LO NOSTRO.** Advances in Colloid and Interface Science. Elsevier Science, 1995, vol. 56, 245-287
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromolecules,* 1997, vol. 30, 6251
- **RESCONI, L. ; CAVALLO, L. ; FAIT, A. ; PIEMONTESI, F.** *Chem. Rev.,* 2000, vol. 100, 1253